(19)

Europäisches
Patentamt
European
Patent Office
Office européen
des brevets

(11) **EP 1 892 951 B1**

(12) **EUROPEAN PATENT SPECIFICATION**

(45) Date of publication and mention
of the grant of the patent:
**14.12.2011 Bulletin 2011/50**

(51) Int Cl.:
***G03B 5/00*** (2006.01)

(21) Application number: **07253228.6**

(22) Date of filing: **16.08.2007**

(54) **Photographic apparatus with image-blur suppression mechanism and image-blur suppression method thereof**

Fotografische Vorrichtung mit Mechanismus und Verfahren zur Unterdrückung von Bildunschärfe

Appareil photographique avec mécanisme de suppression du flou de l'image et procédé de suppression du flou de l'image correspondant

(84) Designated Contracting States:
**DE FR GB**

(30) Priority: **22.08.2006 JP 2006225568**

(43) Date of publication of application:
**27.02.2008 Bulletin 2008/09**

(73) Proprietor: **Ricoh Company, Ltd.**
**Tokyo 143-8555 (JP)**

(72) Inventor: **Matsutani, Atsushi**
**Tokyo 143-8555 (JP)**

(74) Representative: **Leeming, John Gerard**
**J.A. Kemp & Co.**
**14 South Square**
**Gray's Inn**
**London WC1R 5JJ (GB)**

(56) References cited:
**US-A- 5 266 988      US-A- 5 576 787**
**US-A- 5 974 270      US-A- 6 029 009**
**US-B1- 6 704 501**

EP 1 892 951 B1

**EP 1 892 951 B1**

**Description**

BACKGROUND OF THE INVENTION

Field of the Invention

The present invention relates to a photographic apparatus with an image-blur suppression mechanism to perform an image-blur suppression operation during photographing, and an image-blur suppression method thereof.

Description of Related Art

Heretofore, there is disclosed in for example JP 2001-66655A a photographic apparatus which is provided with an image-blur suppression mechanism. The photographic apparatus includes a CCD disposed at a base plate. The image-blur suppression mechanism detects an image-blur amount of the photographic apparatus main body caused by hand movement and moves the base plate according to the amount of image-blur detected to perform an image-blur suppression operation.
Furthermore, there is also disclosed in JP H11-183954A a photographic apparatus which includes an image-blur suppression optical system-driving device for driving the image-blur suppression optical system to change its location, and a control device for controlling the image-blur suppression optical system-driving device and other driving devices. The image-blur suppression optical system-driving device temporarily stops driving the image-blur suppression optical system in accordance with a load on the control device.
However, for a photographic apparatus with an image-blur suppression mechanism in which a CCD or a lens is made to follow a target position under a servo control, it is necessary to move the CCD or the lens continuously in each predetermined time duration predetermined. In order to produce a perfect exposure in photographing, it is required that a shutter is shut at an accurate timing and a flash light be flashed for an accurate time duration.
Therefore, in order to meet the above-mentioned requirements, an ASIC (Application-Specific Integrated Circuit) for performing image-blur suppression and a CPU are provided in the above-mentioned photographic apparatuses, respectively.
However, since each of the photographic apparatuses is equipped with only one CPU, when only one CPU is used to perform the two processing operations of the servo control processing and the accurate exposure processing which are carried out in parallel, there occurs a timing overlap and therefore it is difficult to perform either of the two processing operations with an accurate timing. As a result, irregular variations may occur on the exposure time and the flashing time of the flash light, resulting in a low-accuracy control.
In order to solve such problems, the same applicant discloses in JP 2005-286902 a camera with an image-blur suppression mechanism, by which the image-blur suppression operation is temporarily stopped at a time when a control relating to exposure is performed so that the image-blur suppression operation will not interfere with the exposure control.
However, in the above-mentioned camera with the image-blur suppression mechanism, the CCD will deviate from the target position when the servo control is stopped. A large deviation will result in a quality-deteriorated image, such as a loose-profile image or an overlapped image.
US 6,704,501 discloses an image-blur correction device for a camera, in which a photographer may inhibit blur correction in the photography operation as preferred, enabling the photographer to take a picture with intentional hand vibration.
US 5,576,787 disclosed an image-shake correcting camera in which a photographic operation may be inhibited until filter circuits in a control circuit portion are stabilised; alternatively a photographic operation may be allowed without the shake prevention process to avoid losing a photo opportunity.

SUMMARY OF THE INVENTION

The present invention has been accomplished in view of the aforementioned problems and it is, therefore, an object of the present invention to provide a photographic apparatus with an image-blur suppression mechanism which performs image blurring suppression accurately for minimizing a deviation, and an image-blur suppression method thereof.
To attain the above-mentioned object, according to one aspect of the present invention, there is provided a photographic apparatus, as specified in the claims.
Moreover, according to another aspect of the present invention, there is provided an image-blur suppression method as specified in the claims.
In a conventional photographic apparatus, since a driving force of the image-blur suppression mechanism remains unaltered right before the image-blur suppression operation is temporarily stopped, the deviation degree from the target position is large regardless of a large driving force or a small driving force.

According to the above-mentioned configurations, since the driving is reset right before the image-blur suppression operation is temporarily sopped, the deviation amount becomes small and accordingly the image-blur suppression accuracy is improved.

BRIEF DESCRIPTION OF THE DRAWINGS

Fig. 1A is a top view of a digital camera as an example of a photographic apparatus according to the present invention;

Fig. 1B is a front view of the digital camera according to the present invention;

Fig. 1C is a rear view of the digital camera according to the present invention;

Fig. 2 is a circuit block view schematically illustrating an inner system configuration of the digital camera according to the present invention;

Fig. 3 is a flow chart schematically illustrating a general operation of two modes of the digital camera according to the present invention;

Fig. 4A is a flow chart illustrating a countdown timer function of the digital camera according to the present invention;

Fig. 4B is a flow chart illustrating a free-run timer function of the digital camera according to the present invention;

Fig. 5 is a view illustrating a principle of an image-blur suppression of the digital camera according to the present invention, wherein Fig. 5A shows an inclination of the digital camera and Fig. 5B is an enlarged partial view illustrating a relationship between a photographic plane of a CCD and a photographic lens of the digital camera;

Fig. 6 is a front view illustrating a holding tube for housing a lens barrel of the digital camera according to the present invention;

Fig. 7 is a vertical sectional view of the holding tube in Fig. 6;

Fig. 8 is a rear view of the holding tube in Fig. 6, wherein Fig. 8A is a view illustrating a case in which a flexible base plate is not mounted and Fig. 8B is a view illustrating a case in which the flexible base plate is mounted;

Fig. 9 is an exploded perspective view of a CCD stage of the digital camera according to the present invention;

Fig. 10 is an enlarged partial sectional view of the holding tube in Fig. 8B sectioned along an II-II line;

Fig. 11 is an explanatory view illustrating a zero point retention mechanism according to the present invention, wherein Fig. 11A is a perspective view illustrating a connection relationship among the CCD stage, a stepping motor and a conversion mechanism and Fig. 11B is an enlarged partial view of the conversion mechanism;

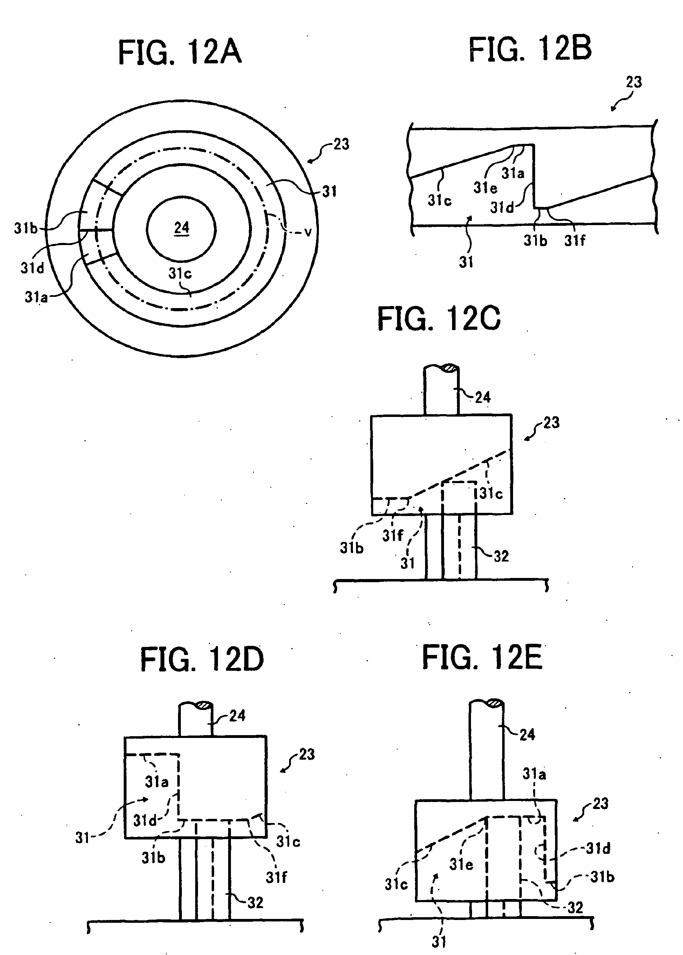

Fig. 12 is a schematic diagram illustrating a cam groove of a rotation transmitting gear, wherein Fig. 12A is a bottom view of the rotation transmitting gear, Fig. 12B is a sectional view of the rotation transmitting gear in Fig. 12A sectioned along a circular dotted and dashed line V; Fig. 12C is a view illustrating a state when a cam pin slides along an inclination surface of the cam groove to push up the rotation transmitting gear toward a base member, Fig. 12D is a view illustrating a state when the cam pin is contacted to a apex flat part of the cam groove to push up the rotation transmitting gear to a highest position, and Fig. 12E is a view illustrating a state when the cam pin is contacted to a valley flat part of the cam groove to push down the rotation transmitting gear to a lowest position;

Fig. 13 is an explanatory view illustrating a fitted state between a holding pin and a concave portion, wherein Fig. 13A is an enlarged partial sectional view illustrating a close fitting state between the holding pin and the concave portion and Fig. 13B is an enlarged partial sectional view illustrating a separating state between the holding pin and the concave portion;

Fig. 14 is a view illustrating a relationship between a focal distance and a deviation amount;

Fig. 15 is a view illustrating a relationship between a blurring angle and displacement amount of the CCD for the image-blur suppression;

Fig. 16A is a view illustrating a control period of 0.0001s of a servo control device for driving the CCD;

Fig. 16B is a view illustrating a control period of 0.000005s of a servo control device for driving the CCD;

Fig. 17 is a flow chart illustrating an image-blur suppression operation according to Embodiment 1;

Fig. 18 is a view illustrating a moving state of the CCD with respect to a target position;

Fig. 19 is a flow chart illustrating an example of a still photographic process;

Fig. 20 is a view illustrating a timing chart at exposing;

Fig. 21 is a view illustrating in detail principle parts of Fig. 20;

Fig. 22A is a view illustrating a functioning process of the countdown timer;

Fig. 22B is a view illustrating a functioning process of the free-run timer;

Fig. 23 is a view illustrating a timing chart at exposing according to a variant example of Embodiment 1;

Fig. 24A is a view illustrating a functioning process of the countdown timer according to the variant example of Embodiment 1;

Fig. 24B is a view illustrating a functioning process of the free-run timer according to the variant example of Embodiment 1;

Fig. 25 is a view illustrating a case of taking 2T as a reference when a total value of the countdown timers is greater than 2T;

Fig. 26 is a time-displacement view illustrating the displacement amount of the CCD when the servo control is stopped;

Fig. 27 is a time-displacement view illustrating the displacement amount of the CCD when the servo control is stopped;

Fig. 28 is a flow chart illustrating an image-blur suppression operation according to Embodiment 2.

DETAILED DESCRIPTION OF THE PREFERRED EMBODIMENTS

Hereinafter, embodiments according to the present will be described with reference to the drawings.

Embodiment 1

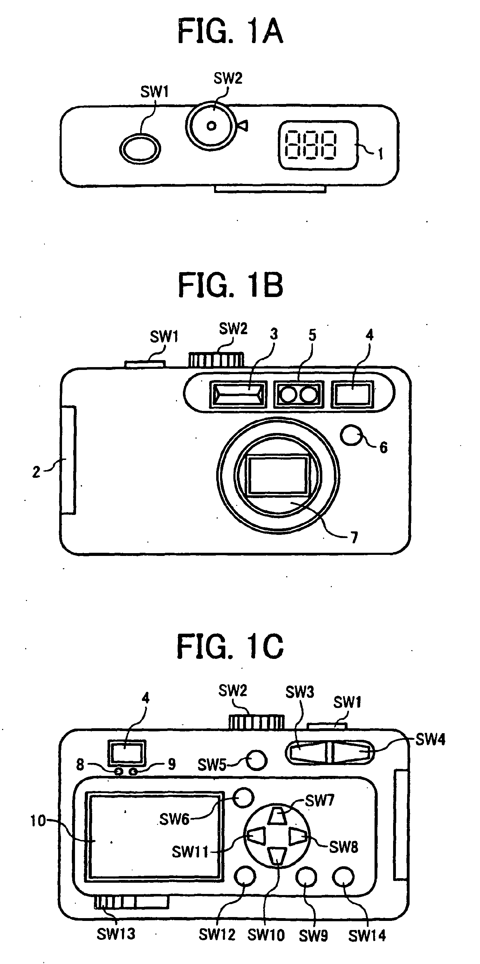

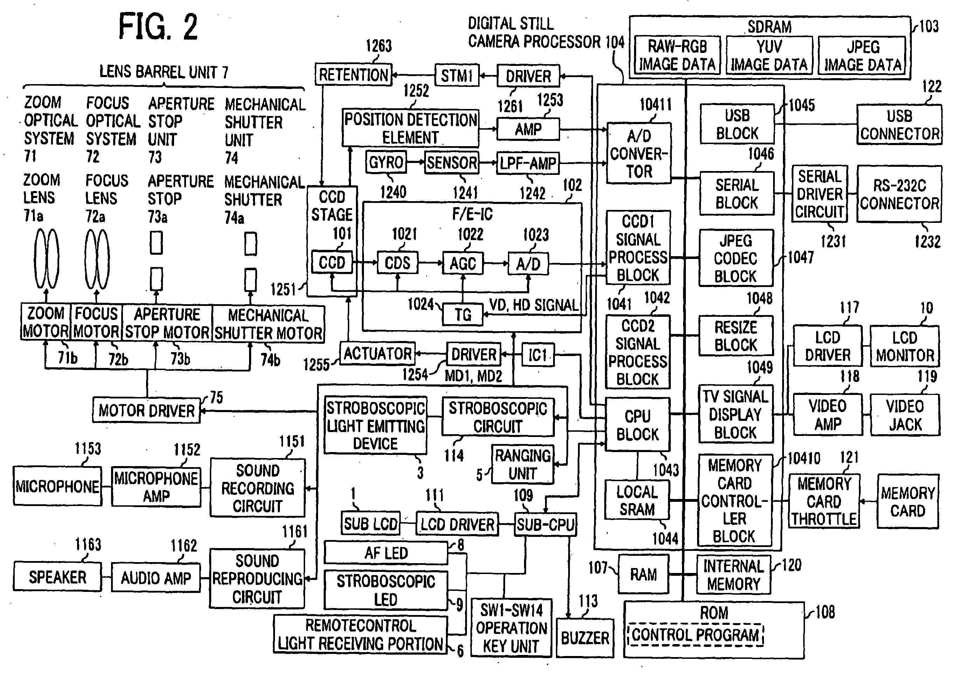

Figs. 1A to 1C show respectively a front view, a rear view and a top view of a digital still camera (hereinafter, referred to as digital camera) according to the present invention and Fig. 2 is a circuit block view schematically illustrating an inner system configuration of the digital camera.

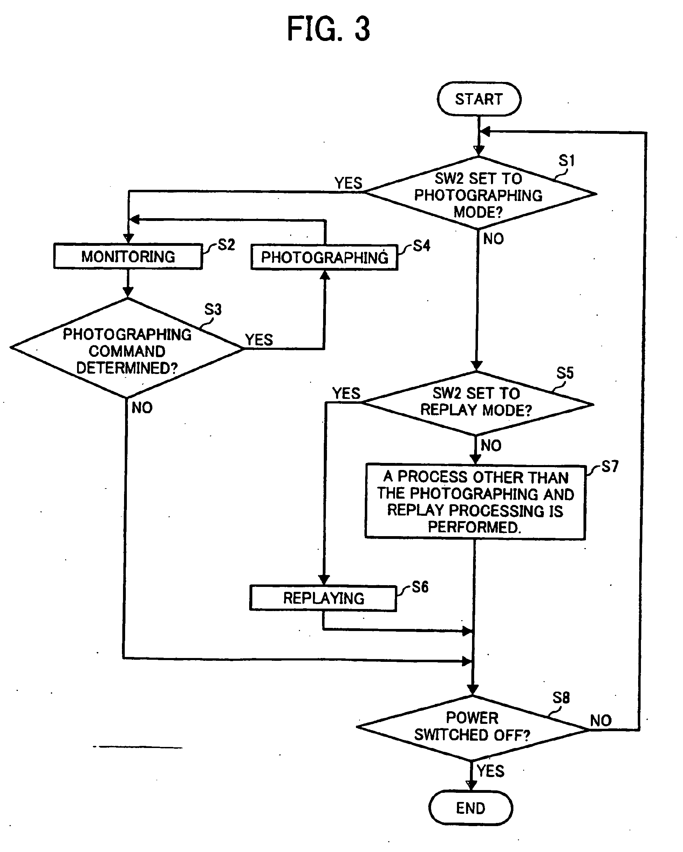

A top surface of a main body of the camera is provided with a release switch (release shutter) SW1 and a mode dial SW2 as illustrated in Fig. 1A and a sub liquid crystal display (abbreviated as a sub LCD hereinafter) 1 as illustrated in Fig. 3.

As illustrated in Fig. 1B, a front surface of the main body of the camera is provided with a lens barrel unit 7 including a photographic lens, an optical finder 4, a strobe light unit 3, a ranging unit 5, a remote control light-receiving unit 6 and a lid of an SD card/battery room 2.

As illustrated in Fig. 1C, a back surface of the camera is provided with a power switch SW13, an LCD monitor 10, an AF LED 8, a strobe LED 9, the optical finder 4, a wide-angle zoom switch SW3, a telescopic zoom switch SW4, a self-timer set/reset switch SW5, a menu switch SW6, an upward/strobe switch SW7, a rightward switch SW8, a display switch SW9, a downward/macro switch SW10, a leftward/image confirmation switch SW11, an OK switch SW12 and an image-blur suppression switch SW14.

Since functions or operations of the above-mentioned members are well known in the art, descriptions there are omitted, and an inner system configuration of the camera will be described hereinafter.

As illustrated in Fig. 2, a numeral 104 represents a processor of the digital still camera (hereinafter referred to as a processor).

The processor 104 includes an A/D converter 10411, a CCD1 signal processing block 1041, a CCD2 signal processing block 1042, a CPU block 1043, a local SRAM 1044, a USB block 1045, a serial block 1046, a JPEG CODEC block 1047 which performs JPEG compression and decompression of an image data, a RESIZE block 1048 which scales up or down the image data through interpolation, a TV signal display block 1049 which converts the image data into a video signal so as to display the image on an external display device such a liquid crystal display (LCD) or TV etc., and a memory card controller block 10410. These blocks are connected with each other via a bus line.

An outside of the processor 104 is provided with a SDRAM 103 which stores RAW-RGB data (already processed with white balance settings and γ settings), YUV data (already processed with luminance and color-difference data conversions) and JPEG data (JPEG compressed data) of the image. The SDRAM 103 is connected to the processor 104 via a memory controller (not shown) and a bus line.

The outside of the processor 104 is further provided with a RAM 107, an embedded memory 120 which stores a photographed image data even if an external memory card is not loaded a memory card slot of the camera and a ROM 108 which stores a control program, and these are also connected to the processor 104 via a bus line.

The control program is loaded to a main memory (not shown) of the processor 104 when the power switch SW13 is set to ON. The processor 104 performs an operation control on each unit according to the control program and stores a control data and a parameter etc. temporarily in the RAM 107.

The lens barrel unit 7 includes a lens barrel and the lens barrel includes a zoom optical system 71 having a zoom lens 71a, a focus optical system 72 having a focus lens 72a, an aperture stop unit 73 having an aperture stop 73a and a mechanical shutter unit 74 having a mechanical shutter 74a. The zoom lens 71a, the focus lens 72a and the aperture stop unit 73 are constituent parts for a photographic optical system. Herein, an optical axis of the photographic optical system is set as a Z axis, and a plane orthogonal to the Z axis is referred to as an XY plane.

The zoom optical system 71, the focus optical system 72, the aperture stop unit 73 and the mechanical shutter unit 74 are driven by a zoom motor 71b, a focus motor 72b, an aperture stop motor 73b and a mechanical shutter motor 74b, respectively.

These motors are driven by a motor driver 75 which is controlled by the CPU block 1043 of the processor 104.

A subject image is formed on a CCD 101 through each lens system of the lens barrel unit 7. The CCD 101 converts the subject image into an image signal, and outputs the image signal to an F/E-IC 102. The F/E-IC102 includes a CDS 1021 which performs a correlated double sampling to eliminate image noise, an AGC 1022 which performs automatic gain control, and an A/D converting unit 1023 which converts an analogue image signal to the digital one. That is to say, the F/E-IC 102 performs a predefined processing on the image signal and converts it from the analogue signal to the digital signal, then outputs the digital signal to the CCD1 signal processing block 1041 of the processor 104.

These signal processing operations are performed via a TG 1024 according to a vertically synchronized signal VD and a horizontally synchronized signal HD outputted from the CCD1 signal processing block 1041 of processor 104. The TG 1024 generates a driving timing signal based on the vertically synchronized signal VD and the horizontally synchronized signal HD.

The CPU block 1043 of the processor 104 is configured to control a sound recording circuit 1151 which performs a sound recording operation. A sound is converted to a recordable sound signal by a microphone 1153 and amplified by a microphone amplifier 1152. The sound recording circuit 1151 records the amplified signal according to a command. The CPU block 1043 also controls operations of a sound replay circuit 1161. The sound replay circuit 1161 is configured to output sound signals stored in a proper memory according to a command to an audio amplifier 1162 and replay the sound signals from a speaker 1163.

Furthermore, the CPU block 1043 controls a strobe light circuit 114 for making the strobe light unit 3 emit illumination light. In addition, the CPU block 1043 also controls the ranging unit 5.

The CPU block 1043 is connected to a sub CPU 109 of the processor 104 and the sub CPU 109 controls displaying on the sub LCD 1 via a CCD driver 111. The sub CPU 109 is further connected with the AF LED 8, the strobe LED 9, the remote-control light-receiving unit 6, an operation key unit including the switches SW1 to SW14, and a buzzer 113.

The USB block 1045 is connected to a USB connector 122, and the serial block 1046 is connected to a RS-232C connector 1232 through a serial driver circuit 1231. The TV signal display block 1049 is connected to the LCD monitor 10 via an LCD driver 117 and to a video jack 119 for connecting the camera to an external display device such as TV and the like via a video amplifier 118 which converts the TV signal output from the TV signal display block 1049 to a signal of an impedance 75Ω. The memory card controller block 10410 is connected to a contact point between a memory card slot 121 and a memory card.

The LCD driver 117 functions not only to drive the LCD monitor 10 but also to convert the TV signal output from the TV signal display block 1049 to a signal for being displayed on the LCD monitor 10. The LCD monitor 10 is used to monitor the subject state before photographing, confirm a photographed image and display a photographed image stored in the memory card or the embedded memory 120.

The main body of the camera is disposed with a holding tube (to be described hereinafter) which constitutes a part of the lens barrel unit 7. The holding tube is provided with a CCD stage 1251 movable along the XY plane. The CCD 101 is mounted at the CCD stage 1251 which is included in the image-blur suppression mechanism, a detailed mechanical configuration of which will be described hereinafter.

The CCD stage 1251 is driven by an actuator 1255 which is hence controlled by a driver 1254 including coil drives MD1 and MD2. The driver 1254 is connected to an analogue-digital converter circuit IC1 which is then connected to the ROM 108 and receives the control data from the ROM 108.

The holding tube is provided with a zero point retention mechanism 1263 for retaining the CCD stage 1251 at the zero point when the image-blur suppression switch SW14 and the power switch SW13 are off. The zero point retention mechanism 1263 is controlled by an actuator, such as a stepping motor STM1 driven by a driver 1261 to which the control data from the ROM 108 is outputted.

The CCD stage 1251 is attached to a position detecting element 1252, which outputs a detected result to an amplifier 1253 to be amplified and outputted to the A/D converter 10411. A gyro sensor 1241 is disposed in the main body of the camera to detect rotations along the X and Y axial directions, and a detected result from the gyro sensor 1241 is outputted to the A/D converter 10411 via an amphibious low-pass filter and amplifier 1242.

As illustrated in Fig. 3, the digital camera includes at least two modes represented by two blocks: a monitor processing block and a replay block. The two modes can be switched mutually. In the monitor processing block, a menu can be selected for making various settings; and in the replay block, a photographed image can be displayed in the LCD monitor 10.

More specifically, in Fig. 3, whether the mode dial SW2 is set to a photographing mode or a replay mode is determined at step S1. If the mode dial SW2 is set to the photographing mode, the monitor processing is performed at step S2. After the monitor processing, whether a photographing command is inputted is determined at step S3. Photographing will be performed when the photographing command is inputted (step S4) and the process returns back to step S2. If the photographing command is not inputted, the process moves to step S8 which will be described hereinafter.

While at step S1, after the mode dial SW2 is determined not to be set to the photographing mode, whether it is set to the replay mode is determined at step S5. The replay processing for displaying a photographed image will be performed if the mode dial SW2 is set to the replay mode (step S6); otherwise a process other than the photographing and replay processing will be performed (step S7).

After step S3, S6 and S7, whether the power is switched off is determined (step S8). The process will be ended if the power is switched off, otherwise the process returns back to step S1 and is repeated.

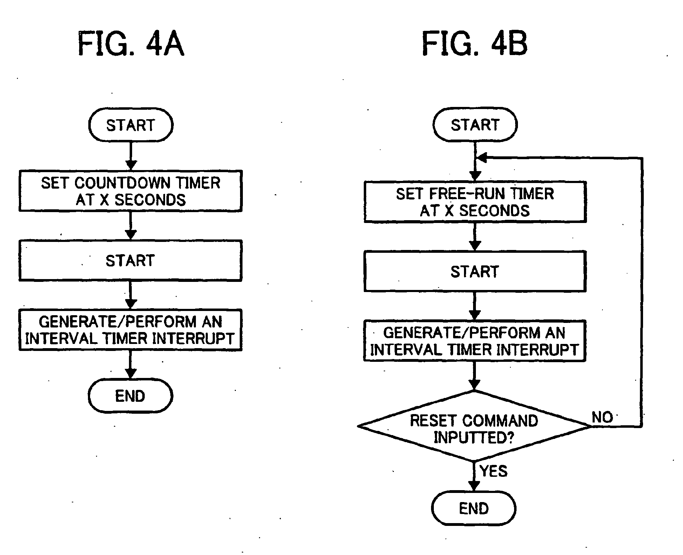

The processor 104 as illustrated in Fig. 2 includes two types of timers: a countdown timer and a free-run timer. Their functions are illustrated in Fig. 4A and Fig 4B, respectively. Either of the two timers can generate an interrupt as soon as a preset number of seconds is counted to zero. The number of seconds counted may be addressed from a register. The countdown timer will terminate counting after one countdown is finished and is needed to be restarted for another counting. While the free-run timer will keep performing an X-second interval interrupt until a reset is performed.

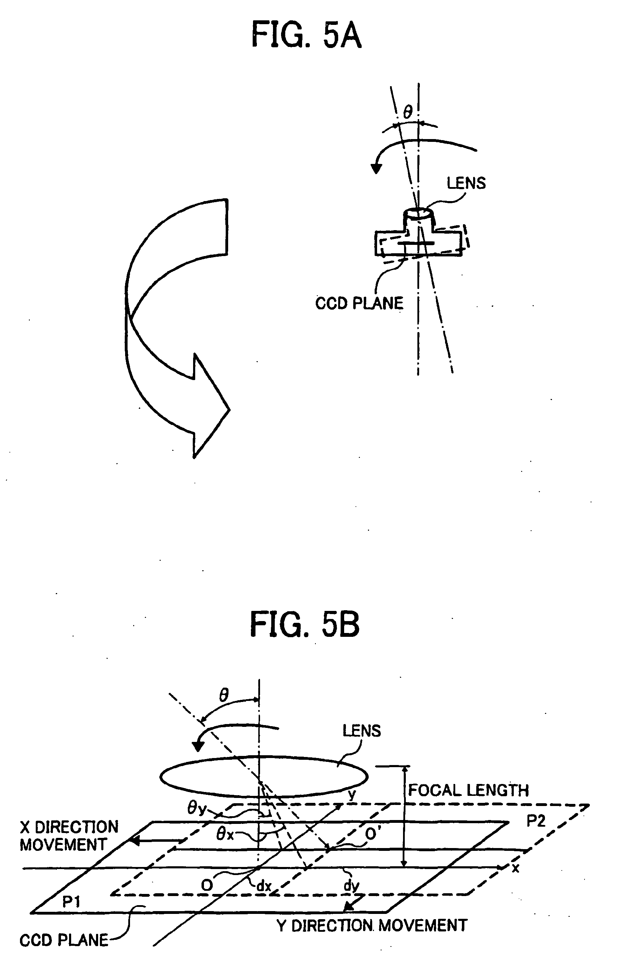

Fig. 5 illustrates a principle of the image-blur suppression by a sliding CCD. When the photographing plane (CCD plane) is positioned at a position P1, the subject image is projected at the zero point O. In the present embodiment, the digital camera is presumed to be inclined by hand movement at an angle of θ (θx, θy). Accordingly, the photographing plane is moved to a position P2 and the subject image is projected at a position O'. Thus, the image-blur suppression mechanism functions to move in parallel to the photographing plane with a dx moving amount along the X axial direction and a dy moving amount along the Y axial direction such that the photographic plane returns back to the original position P1.

Hereinafter, the mechanical configuration of the image-blur suppression mechanism will be described.

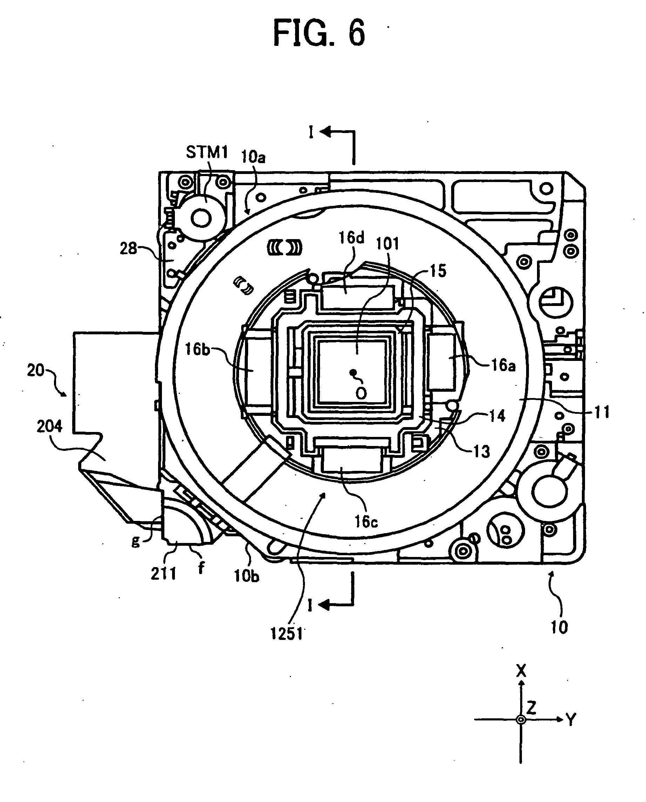

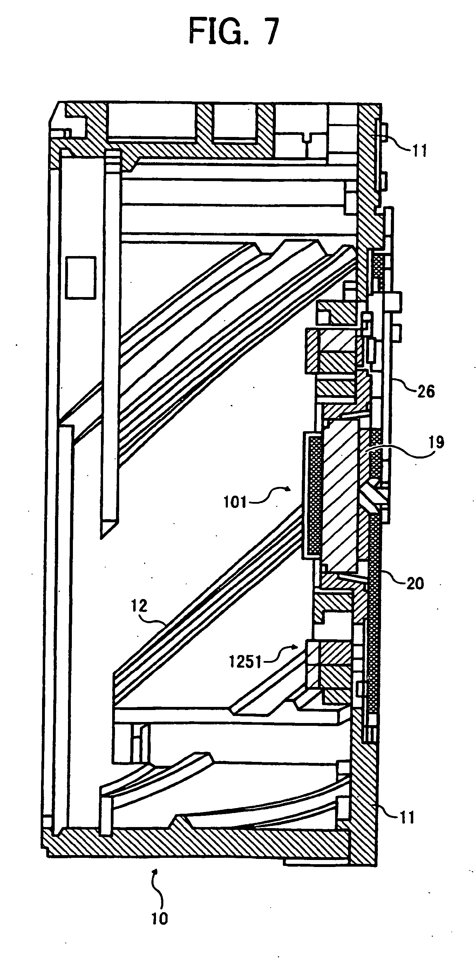

As illustrated in Fig. 6 to Fig. 8, a numeral 10 represents the holding tube of a box shape. An inner part of the holding tube 10 is a space for holding the lens barrel therein. The holding tube 10 is disposed in the main body at a defined position in relation to a photographic optical axis. A rear surface of the holding tube 10 is attached to a base member 11 which is a plate of a roughly rectangular shape. A helicoid 12 is formed at an inner peripheral wall of the holding tube 10 for extending or retracting the lens barrel. The holding tube 10 has at least two corners being cut out to form one corner portion 10a as an attaching portion for the stepping motor STM1 and the other corner portion 10b as a folding space for a flexible base plate 20 which will be described hereinafter.

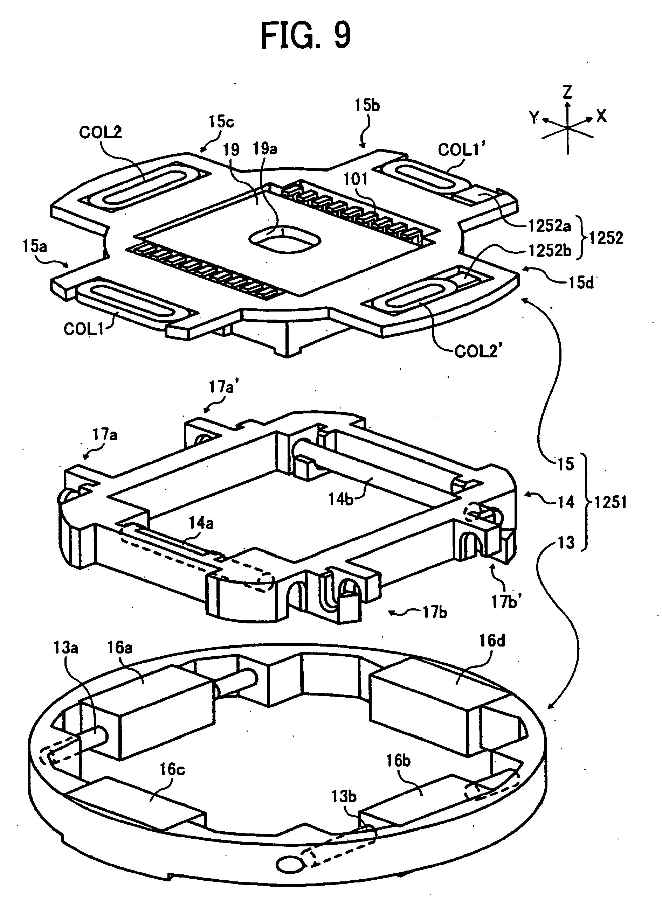

The CCD stage 1251 is provided at the base member 11. The CCD stage 1251 includes substantially an X direction stage 13 of an annular shape, a Y direction stage 14 of a rectangular shape and a mount stage 15, as illustrated in the exploded view of Fig. 9.

The X direction stage 13 is fixed at the base member 11. In the X direction stage 13, there are provided a pair of guide shafts 13a and 13b extending along the X axial direction, and four permanent magnets 16a to 16d of a cubic shape. The guide shafts 13a and 13b are disposed with a separating interval along the Y axial direction. The four permanent magnets 16a to 16d are provided at the XY plane in pair, having one pair of the permanent magnets 16a and 16b disposed in parallel with each other with a separating interval along Y axial direction and the other pair of the permanent magnets 16c and 16d disposed in parallel with each other with a separating interval along X axial direction. In the present embodiment, the pair of the guide shafts 13a and 13b are configured to pass through the pair of the permanent magnets 16a and 16b but not limited to the configuration; it is also preferable to dispose the pair of the permanent magnets 16a and 16b in parallel with the pair of the guide shafts 13a and 13b.

In the Y direction stage 14, there are provided a pair of guide shafts 14a and 14b extending along the Y axial direction, a pair of groove portions 17a and 17a', and a pair of groove portions 17b and 17b'. The guide shafts 14a and 14b are disposed with a separating interval along the Y axial direction. The two pairs of groove portions 17a and 17a', 17b and 17b' which are formed with a separating interval along the Y axial direction and are opposing to each other with a separating interval along the X axial direction are supported by the pair of guide shafts 13a and 13b, respectively. As a result, the Y direction stage 14 is movable along the X axial direction.

The mount stage 15 includes a pair of coil attaching plates 15a and 15b extending out to the X axial direction and a pair of coil attaching plates 15c and 15d extending out to the Y axial direction. The CCD 101 is fixed at the center of the mount stage 15. At the mount stage 15, there are also provided at the same side as the photographic plane of the CCD 101 two pairs of groove portions (numerals omitted) which are formed with a separating interval along the X axial direction and are opposing to each other with a separating interval along the Y axial direction and are supported by the pair of guide shafts 14a and 14b, respectively. As a result, the mount stage 15 as a whole is movable along the X and Y axial directions.

A protection plate 19 is attached to a surface opposing to the photographic plane of the CCD 101. A concave portion 19a of a tapered shape is formed at the center of the protection plate 19, whose functions will be described hereinafter.

Coiled bodies COL 1 and COL 1' which are flat and convoluted are attached to the pair of coil attaching plates 15a and 15b, respectively. The coiled bodies COL 1 and COL 1' are connected in series. Similarly, coiled bodies COL 2 and COL 2' which are flat and convoluted are attached to the pair of coil attaching plates 15c and 15d, respectively. The coiled bodies COL 2 and COL 2' are also connected in series.

The coiled bodies COL 1 and COL 1' are confronted by the permanent magnets 16c and 16d, respectively; and the coiled bodies COL 2 and COL 2' are confronted by the permanent magnets 16a and 16b, respectively. The pair of coiled bodies COL 1 and COL 1', and the pair of COL 2 and COL 2' are used to move the CCD 101 along the X axial direction and the Y axial direction, respectively.

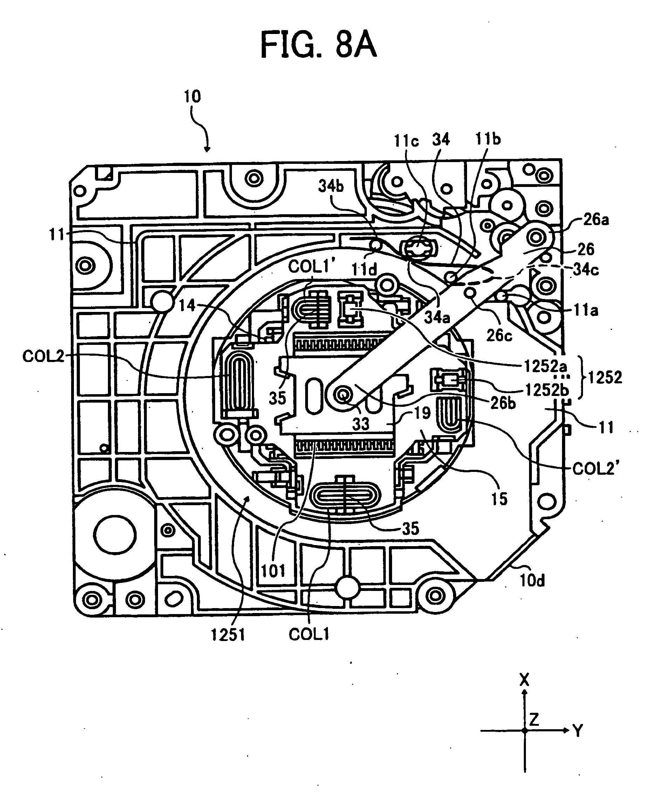

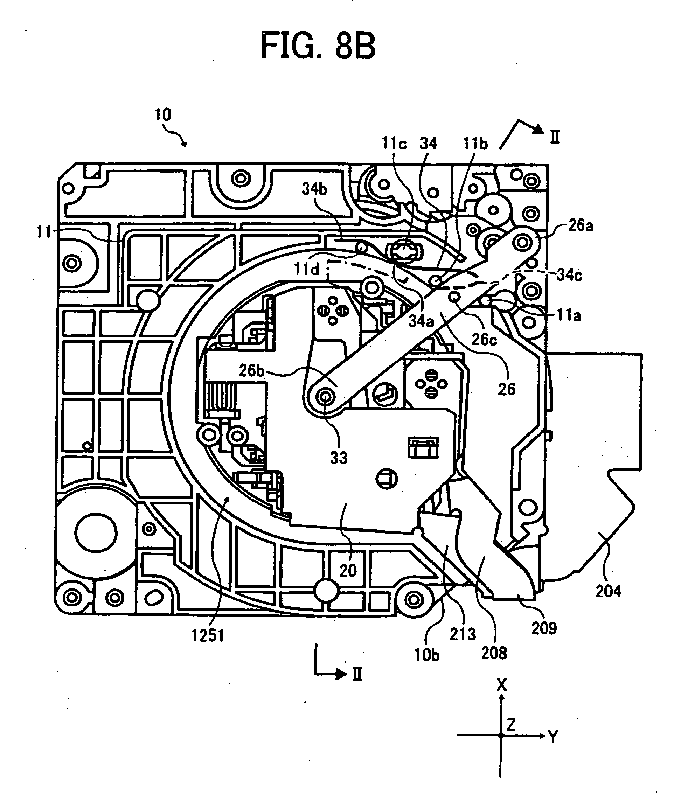

As illustrated in Fig. 8, an adsorption bar 35 is disposed at the respective coiled bodies COL 1 and COL 1' so as to intersect the respective coiled bodies COL 1 and COL 1' along the X axial direction.

In the present embodiment, a Hall element is used in the position detecting element 1252. At one of the coil attaching plates 15a and 15b, for example, the coil attaching plate 15b is provided with a Hall element 1252a. Similarly, a Hall element 1252b is provided at one of the coil attaching plates 15c and 15d, for example, the coil attaching plate 15d.

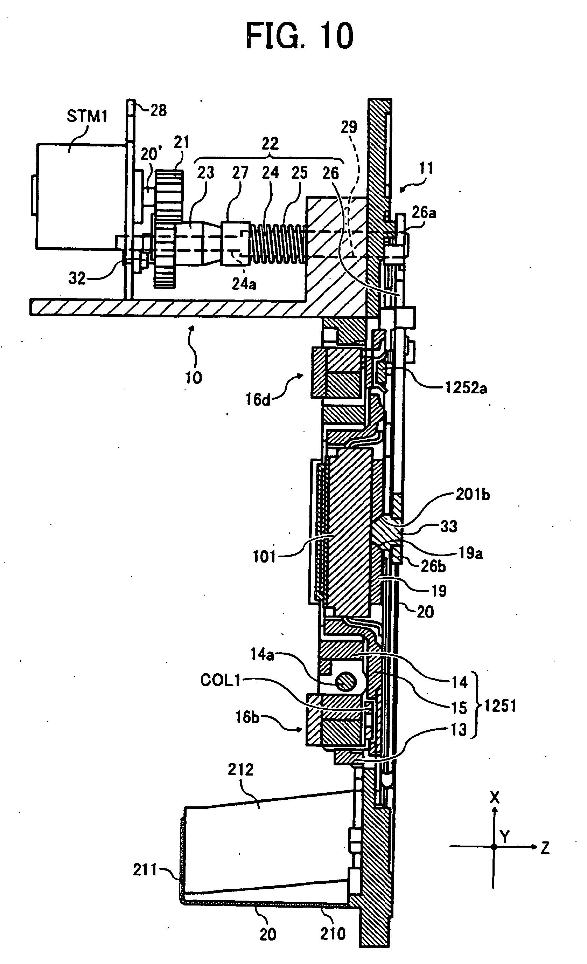

The CCD 101 is electrically connected to the F/E IC 102 via the flexible base plate 20 as illustrated in Fig. 10. The Hall elements 1252a and 1252b are connected electrically to the amplifier 1253 which is an operational amplifier via the flexible base plate 20 and each of the coiled bodies COL 1, COL 1', COL 2 and COL 2' is connected electrically to the coil driver 1254.

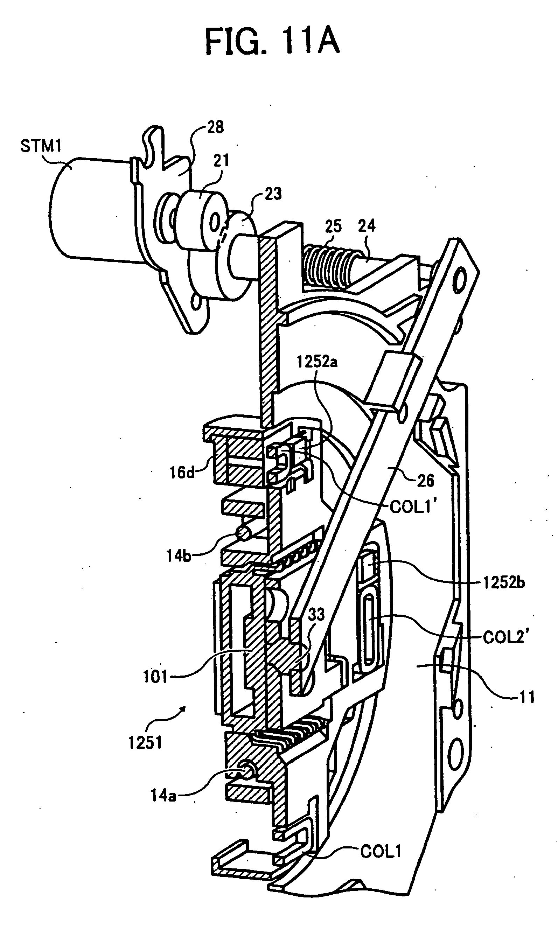

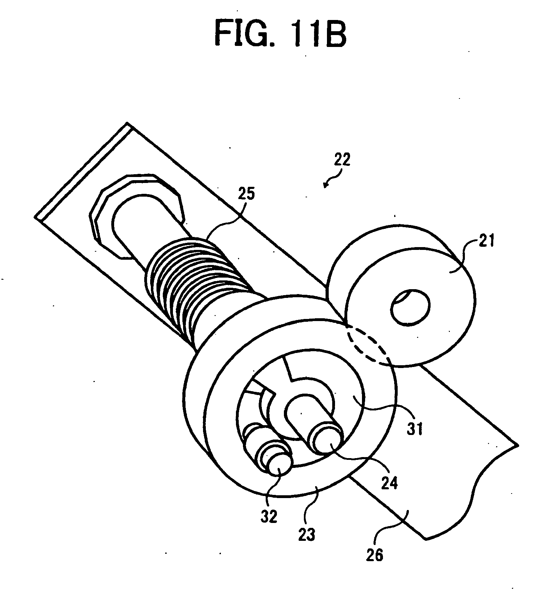

As illustrated as an enlarged view in Fig. 10 and Fig. 11, the zero point retention mechanism 1263 includes the stepping motor STM1, whose mechanical configuration will be firstly described here in detail, leaving the descriptions on driving and controlling of the stepping motor STM1 thereafter.

As illustrated in Fig. 6, the stepping motor STM1 is disposed at the corner portion 10a of the holding tube 10. As illustrated in Fig. 10, an output shaft 20' of the stepping motor STM1 is provided with an output gear 21. The corner portion 10a is provided with a conversion mechanism 22 which converts a rotational movement to a linear movement.

The conversion mechanism 22 includes a rotation transferring gear 23, a spring bearing member 27, a reciprocating shaft 24, a coil biasing spring 25 and a spring retention plate 26. The corner portion 10a of the holding tube 10 is provided with a pair of supporting portions 28 and 29 with a separating interval along the Z axial direction. In the present embodiment, the supporting portion 28 is constituted by a motor attaching plate. The reciprocating shaft 24 is supported by crossing the motor attaching plate 29 and the supporting portion 29. The rotation transferring gear 23 is disposed to be rotationally supported by the reciprocating shaft 24 and meshed with the output gear 21 between the pair of supporting portions 28 and 29.

One end portion of the reciprocating shaft 24 penetrates the supporting portion 29 and confronts a back surface of the base member 11. The coil biasing spring 25 is provided between the spring bearing member 27 and the supporting portion 29 for biasing the reciprocating shaft 24 toward the supporting portion 28. The reciprocating shaft 24 includes a ramp portion 24a for engaging with a shaft hole at an end portion of the rotation transferring gear 23.

As illustrated in Figs. 12A to 12E, there is formed a cam groove 31 at the end portion of the rotation transferring gear 23, extending around the rotation transferring gear 23. The cam groove 31 includes a flat valley floor 31a, a flat peak 31b, an inclination surface 31c inclining continuously from the flat valley floor 31 up to the flat peak 31b and a sharp wall 31d formed between the flat valley floor 31 and the flat peak 31b as a contacting wall for a cam pin 32 to be described hereinafter.

There is fixed at the supporting portion 28 the cam pin 32, a top end of which contacts the cam groove 31 in such a way that it is slidable along the cam groove 31. A rotation length of the flat valley floor 31a from the sharp wall 31d to an inclination starting point 31e of the inclination surface 31c is configured to be equivalent to 2 pulses of a rotation control signal of the stepping motor STM1.

A rotation length of the inclination surface 31c from the inclination starting point 31e of the inclination surface 31c passing through the flat peak 31b to an inclination ending point 31f of the inclination surface 31c is configured to be equivalent to 30 pulses of the rotation control signal of the stepping motor STM1.

A rotation length of the flat peak 31b from the inclination ending point 31f to the sharp wall 31d is configured to be equivalent to 3 pulses of the rotation control signal of the stepping motor STM1. The 35 pulses of the rotation control signal of the stepping motor STM1 correspond to one rotation round of the rotation transferring gear 23 which makes the reciprocating shaft 24 complete one reciprocation along the Z axial direction.

As illustrated in Fig. 8A and Fig. 8B, the back surface of the base member 11 is provided with the spring retention plate 26 elongated toward the center of the CCD 101 which is configured to have a rear end portion 26a fixed at one end of the reciprocating shaft 24, a free end portion 26b fixed by a taper-shaped retention pin 33, and a protruding guide axis 26c formed therebetween.

Position determining projections 11a and 11b, a coil attaching projection 11c and an engaging projection 11d are formed at the base member 11. A recoiled portion 34a of a torsion spring 34 is attached to the coil attaching projection 11c, while one end portion 34b of the torsion spring 34 is engaged with the engaging projection 11d and the other end portion 34c of the torsion spring 34 is engaged with the guide axis 26c. A guide hole (not shown) for guiding the guide axis 26c is formed at the base member 11.

While retaining contact to the position determining projection 11a, the spring retention plate 26 is made reciprocated by the torsion spring 34 for moving away from or approaching to the base member 11 along the Z axial direction in accordance with the reciprocation of the reciprocating shaft 24. The guide axis 26c functions to stabilize the reciprocating movement of the spring retention plate 26.

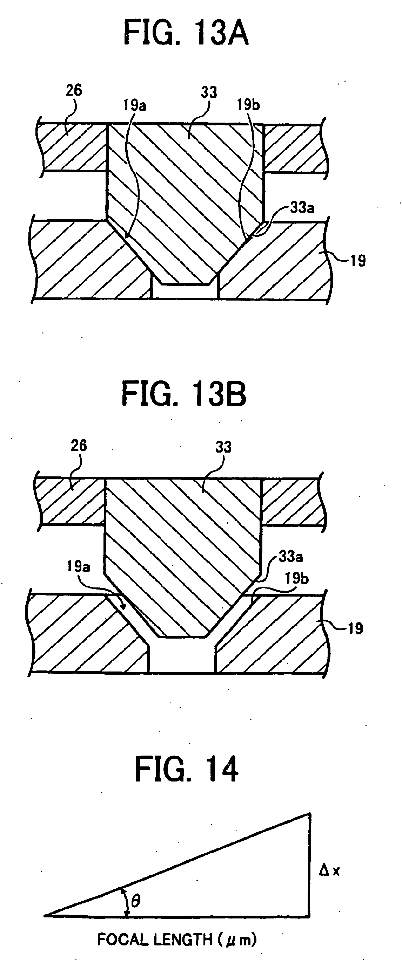

The retention pin 33 fulfills its function for retaining mechanically the mount stage 15 at the zero point position by fitting itself to the concave portion 19a. As illustrated in an enlarged view in Fig. 13A, a state in which a peripheral wall 33a of the retention pin 33 is closely fitted to the concave portion 19a of the protection plate 19 corresponds to a holding standby position of the cam pin 32 which is also the zero point position of the mount stage 15. While another state in which the peripheral wall 33a of the retention pin 33 is separated by the maximum distance to the concave portion 19a of the protection plate 19 corresponds to a releasing standby position of the cam pin 32, as illustrated in an enlarged view in Fig. 13B.

The target position for the CCD to be moved is determined according to an input from the gyro sensor 1241. The gyro sensor 1241 is configured to detect rotations from the Pitch direction and Yaw direction of the digital camera. Outputs from the gyro sensor 1241 are retrieved by the A/D converter 10411 every T seconds and converted from analogue to digital ones.

θ yaw (t) and θ pitch (t) may be obtained from the following equations:

$$\theta \ yaw \ (t) = \sum \omega \ yaw \ (i) \times T$$

$$\theta \ pitch \ (t) = \sum \omega \ pitch \ (i) \times T$$

wherein i is from 0 to t, and
θ yaw (t): an instant angular variation in the Yaw direction;
θ pitch (t): an instant angular variation in the Pitch direction;
ω yaw (t): an instant angular velocity in the Yaw direction; and
ω pitch (t): an instant angular velocity in the Pitch direction.

A focus length f is determined by a zoom point zp and a focus point fp. Thus, D yaw (t), D pitch (t), θ yaw (t) and θ pitch (t) satisfy equations listed as follows:

$$D \ yaw \ (t) = f \times \tan \ (\theta \ yaw \ (t))$$

$$D \ pitch \ (t) = f \times \tan \ (\theta \ pitch \ (t))$$

Wherein:

D yaw (t): a displacement amount of an image along the X axial direction corresponding to rotation in Yaw direction; and
D pitch (t): a displacement amount of an image along the Y axial direction corresponding to a rotation in the Pitch direction.

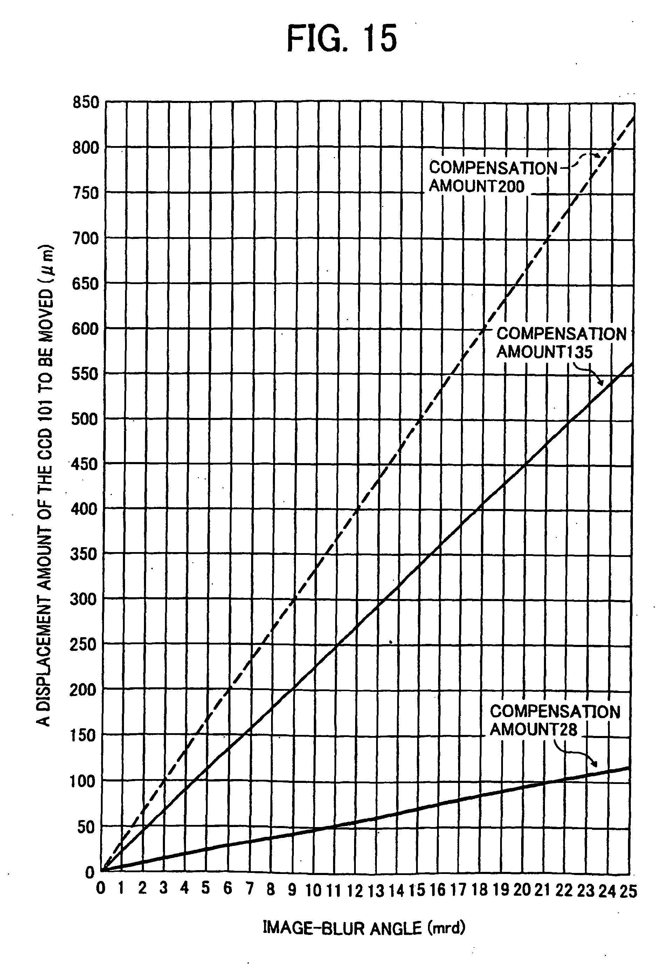

In other words, D yaw (t) and D pitch (t) correspond to a displacement amount of the CCD 101 which should be moved. Fig. 15, Table 1 and Table 2 illustrate a relationship of the image-blur angle and the displacement amount of the CCD 101 to be moved.

Table 1 Relationship of Focal Length and Real Focal Length

| 35mm focal length | 28 | 135 | 200 |
|---|---|---|---|
| Real focal length | 4.7 | 22.6 | 33.5 |

Table 2 Relationship of Image-blur Angle and Displacement Amount

| | Displacement Amount (Single Side) | | |
|---|---|---|---|
| Image-blur Angle | 28 | 135 | 200 |
| 0 | 0 | 0 | 0 |
| 0.5 | 2 | 11 | 17 |
| 1 | 5 | 23 | 34 |
| 1.5 | 7 | 34 | 50 |

(continued)

| | Displacement Amount (Single Side) | | |
|---|---|---|---|
| 2 | 9 | 45 | 67 |
| 2.5 | 12 | 57 | 84 |
| 3 | 14 | 68 | 101 |
| 3.5 | 16 | 79 | 117 |
| 4 | 19 | 91 | 134 |
| 4.5 | 21 | 102 | 151 |
| 5 | 23 | 113 | 168 |
| 5.5 | 26 | 125 | 184 |
| 6 | 28 | 136 | 201 |
| 6.5 | 31 | 147 | 218 |
| 7 | 33 | 158 | 235 |
| 7.5 | 35 | 170 | 252 |
| 8 | 38 | 181 | 268 |
| 8.5 | 40 | 192 | 285 |
| 9 | 42 | 204 | 302 |
| 9.5 | 45 | 215 | 319 |
| 10 | 47 | 226 | 335 |
| 10.5 | 49 | 238 | 352 |
| 11 | 52 | 249 | 369 |
| 11.5 | 54 | 260 | 386 |
| 12 | 56 | 272 | 403 |
| 12.5 | 59 | 283 | 419 |
| 13 | 61 | 294 | 436 |
| 13.5 | 63 | 306 | 453 |
| 14 | 66 | 317 | 470 |
| 14.5 | 68 | 328 | 486 |
| 15 | 70 | 340 | 503 |
| 15.5 | 73 | 351 | 520 |
| 16 | 75 | 362 | 537 |
| 16.5 | 77 | 374 | 554 |
| 17 | 80 | 385 | 570 |
| 17.5 | 82 | 396 | 587 |
| 18 | 85 | 408 | 604 |
| 18.5 | 87 | 419 | 621 |
| 19 | 89 | 430 | 637 |
| 19.5 | 92 | 442 | 654 |
| 20 | 94 | 453 | 671 |
| 20.5 | 96 | 464 | 688 |

(continued)

| | Displacement Amount (Single Side) | | |
|---|---|---|---|
| 21 | 99 | 476 | 704 |
| 21.5 | 101 | 487 | 721 |
| 22 | 103 | 498 | 738 |
| 22.5 | 106 | 510 | 755 |
| 23 | 108 | 521 | 772 |
| 23.5 | 110 | 532 | 788 |
| 24 | 113 | 543 | 805 |
| 24.5 | 115 | 555 | 822 |
| 25 | 117 | 566 | 839 |

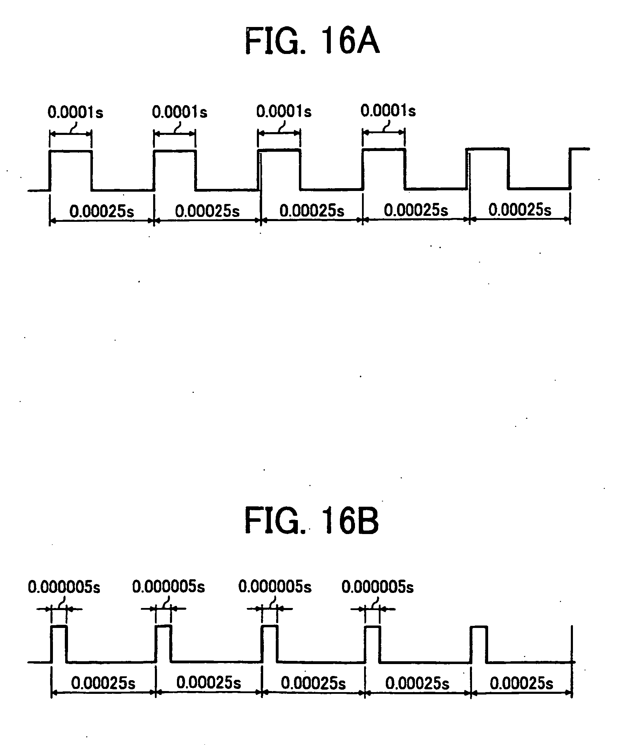

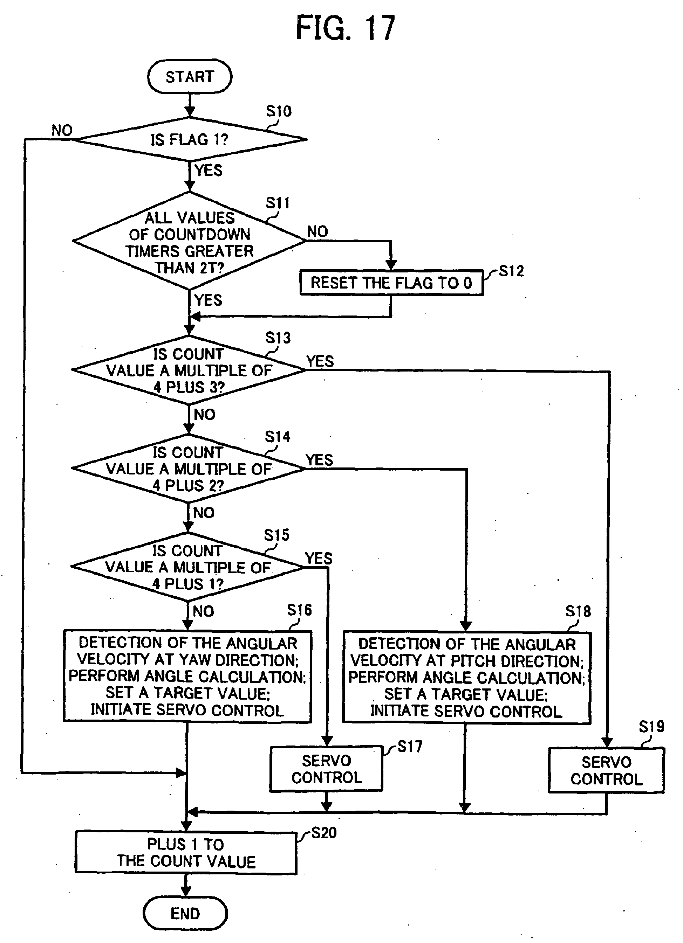

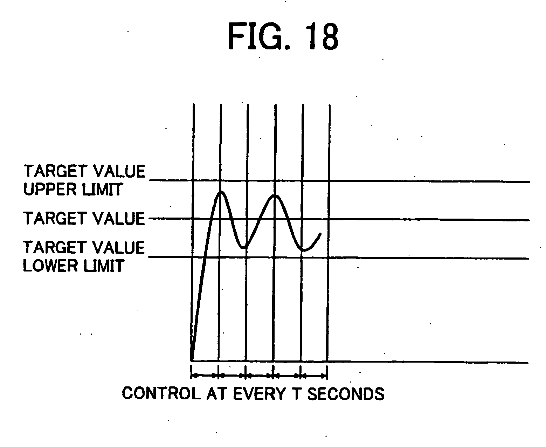

Fig. 16A and Fig. 16B illustrate a control period of a servo control device for driving the CCD. In the present embodiment, a chart flow illustrated in Fig. 17 is performed at every period T = 0.00025s. As a result, the CCD is moved with respect to the target position as illustrated in Fig. 18.

As illustrated in Fig. 17, whether a flag is 1 is firstly determined (step S10). If the flag is 1, the process moves to step S11; otherwise the flow chart moves to step S20. Here, time duration to process the flow in Fig. 17 is set to 0.0001s if the flag is 1 (Fig. 16A); otherwise the time duration is set to 0.000005s (Fig. 16B).

When the flag is determined to be 1 at step S10, whether all values of the countdown timer are greater than 2T is determined (step S11). If all values of the countdown timer are greater than 2T, the process moves to step S13; otherwise the process moves to step S13 after the flag is reset to 0 (step S12).

At step S13, whether the count value is a multiple of 4 plus 3 is determined, if it is Yes, the servo control is initiated to drive the CCD (step S19) and the process moves to step S20 after that; otherwise if it is No, the process moves to step S14.

At step S14, whether the count value is a multiple of 4 plus 2 is determined. If it is Yes, detection of the angular velocity at the Pitch direction and angle calculation are performed and a target value is set, and then the servo control is initiated to drive the CCD (step S18). After that, the process moves to step S20.

At step S15, whether the count value is a multiple of 4 plus 1 is determined, if it is Yes, the servo control is initiated to drive the CCD (step S19). After that, the process moves to step S20.

If the count value is not a multiple of 4 plus 1 at step S15, detection of the angular velocity at Yaw direction and angle calculation are performed and a target value is set, and then the servo control is initiated to drive the CCD (step S16). After that, the process moves to step S20.

At step S20, after 1 is added to the count value, the whole process is finished.

In the servo control, the shorter the period T is, the closer is a convergence to the target value. However, if the period T is set for example at 0.0001s, though it is the shortest interval for the image-blur suppression processing, since the CPU is used for processes other than the image-blur suppression processing, the CPU can not be used at 100% share rate for the image-blur suppression processing. On the other hand, if the CPU shared for the image-blur suppression processing is too high, other interrupt processing will be hindered and as a result the image-blur suppression processing will be affected. In the present embodiment, the period T is set to 0.00025s so that the shared CPU is 40%. The time duration for centering the CCD controlled by the servo control device and for the image-blur suppression processing at exposing is also set to T= 0.00025s.

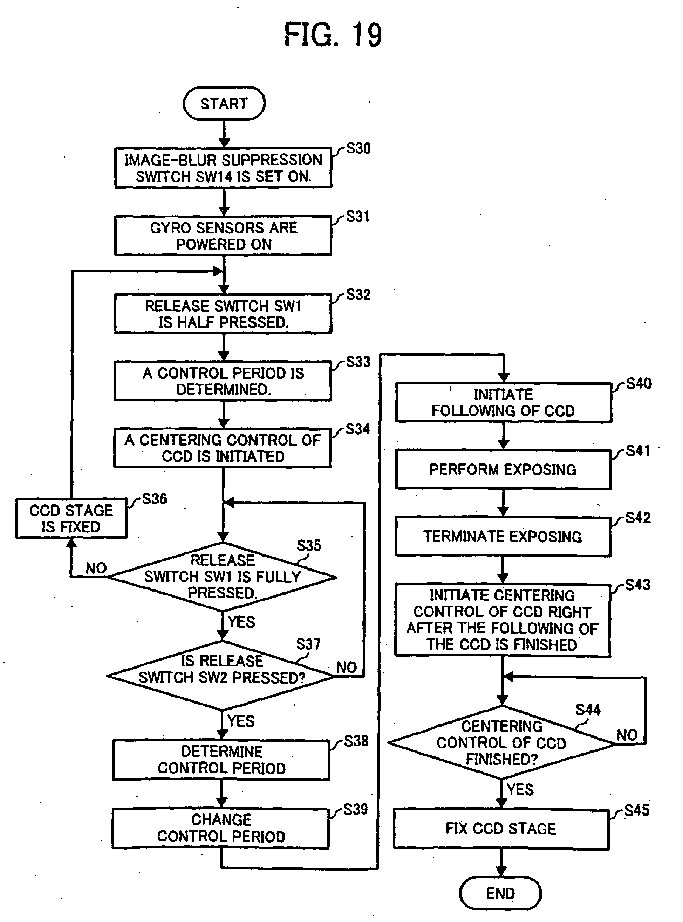

Fig. 19 is a flow chart illustrating an example of a still photographing process.

After the release switch SW1 is pressed down, the retention mechanism for holding the CCD is released and a centering process is performed. After the release switch SW2 is pressed down, the CCD is initiated to follow the target position and exposing is also performed. The following of the CCD is finished together with exposing and the centering process for the CCD is initiated again. After the centering process, the CCD stage is fixed. The release switches SW1 and SW2 are controlled by the CPU block 1043 via the sub CPU 109.

As illustrated in Fig. 19, when the image-blur suppression switch SW14 is set ON (step S30), the gyro sensors are powered ON (step S31). If the release switch SW1 is half pressed (step S32), a control period is determined (step S33), and a centering control of the CCD is initiated (step S34).

Whether the half press of the release switch SW1 is ongoing is determined (step S35). The CCD stage is fixed if the half press of the release switch SW1 is released (step S36) and the process returns back to step S32. If the half press of the release switch SW1 is ongoing, in other words, the release switch SW1 is fully pressed (step S35), whether the release switch SW2 is pressed is determined (step S37). If the release switch SW2 is determined not to be pressed, the process returns back to step S35.

After the release switch SW2 is pressed at step S37, the control period is determined again at step S38. After the control period is changed at step S39, the following of the CCD is initiated at step S40. At step S41, exposing is performed. When exposing is finished at step S42, the centering control of the CCD is initiated immediately after the following of the CCD is finished (step S43).

At step S44, whether the centering control of the CCD is finished is determined. If the centering control of the CCD is finished, the CCD stage is fixed (step S45) and the whole process is finished.

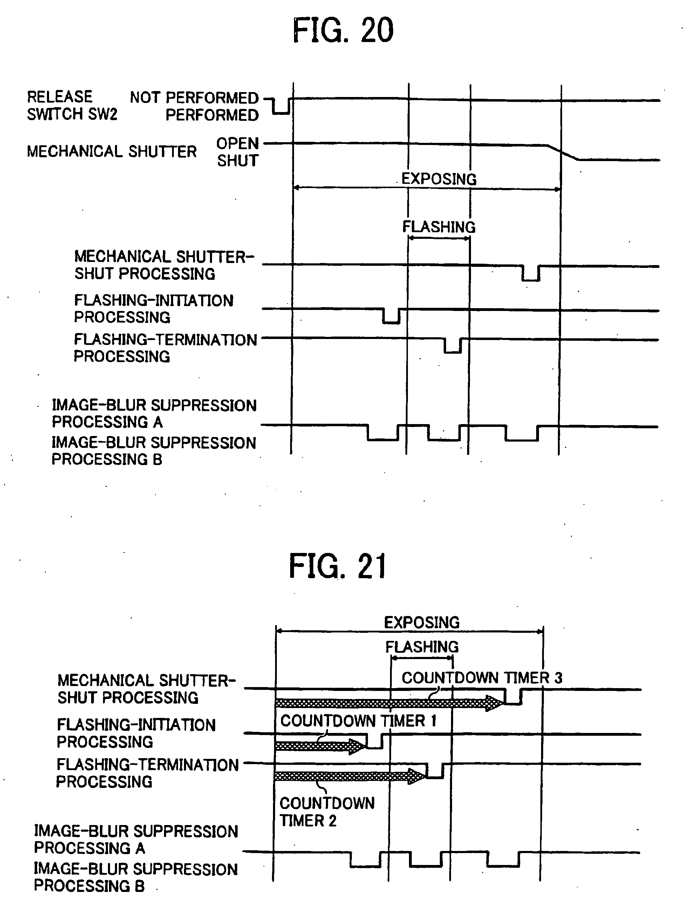

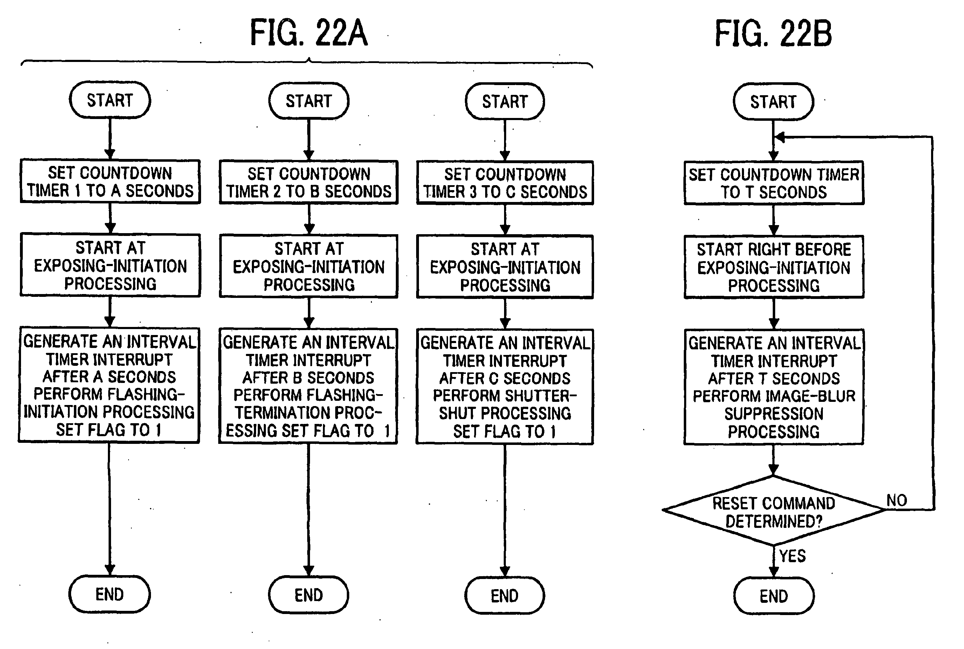

Fig. 20 illustrates a timing chart at exposing; Fig. 21 illustrates in detail principal parts of Fig. 20; Fig. 22A illustrates a functioning process of the countdown timer; and Fig. 22B illustrates a functioning process of the free-run timer.

The image-blur suppression processing A as illustrated in Fig. 20 and Fig. 21 is performed when the flag is determined to be 1 at step S10 of Fig. 17. This processing is a repeated process of re-calculation of the angle, re-setting of the target position and target position following controlled by the servo control device. The longer the repeated process is performed, the longer the CPU will be occupied.

On the other hand, the image blur suppression processing B as illustrated in Fig. 20 and Fig. 21 is performed when the flag is determined not to be 1 at step S10 of Fig. 17. In the image-blur suppression processing B, re-calculation of the angle, re-setting of the target position and following to the target position controlled by the servo control device are not performed. Since the following to the target position is not performed, the time for the CPU occupation is much shorter than that of the image-blur suppression processing A.

In the present embodiment, processing relative to exposing includes a shutter-shutting processing, a flashing-initiation processing and a flashing-termination processing. When the processing relative to exposing is initiated in a predetermined time duration, the image-blur suppression processing is stopped, in other words, the image-blur suppression processing B is performed instead of A. That is to say, the shutter-shutting processing, the flashing-initiation processing and the flashing-termination processing will be performed prior to the image-blur suppression processing.

In Fig. 20 and Fig. 21, the time order is set from the left side to the right side, wherein the exposing time C= 0.5s, the flashing-initiation time B= 0.067s and the flashing-termination time A= 0.068s. Moreover, the free-run timer is started before exposing, and the initial value for the flag is set to 1. The process illustrated by the flow chart in Fig. 17 is continuously performed at period T.

Three countdown timers 1, 2 and 3 as illustrated in Fig. 22A are initiated at the same time when exposing is initiated (see Fig. 21).

Immediately before the flashing-initiation processing is performed, the flag is reset to 0 according to the determination that all values of the countdown timers are greater than 2T at step S11. In a next interrupt, if the flag is determined not to be 1, the flow in Fig. 17 will be carried out without actually performing anything.

When the countdown timer 1 counts down to 0, the flashing-initiation processing is interrupted. Even though the timing of the flashing-initiation processing happens to coincide with that of the image-blur suppression processing, since the time duration for the image-blur suppression processing is 0.000005s at this time, the timing deviation of flashing-initiation processing may be neglected.

At a final stage of the flashing-initiation processing the flag is set to 1. When all values of the countdown timers being greater than 2T are determined, the image-blur suppression processing is interrupted again and image-blur suppression is performed.

When all values of the countdown timers being smaller than 2T are determined as illustrated in Fig. 17 immediately before the flashing-termination processing, the flag becomes 0. In a next interrupt, since the flag is determined not to be 1 at step S10 of Fig. 17, the flow in Fig. 17 will be carried out without actually performing anything.

When the countdown timer 2 counts down to 0, the flashing-termination processing is interrupted. Even though the timing of the flashing-termination processing happens to coincide with that of the image-blur suppression processing, since the image-blur suppression processing almost performs nothing at this time, the timing deviation of flashing-termination processing may be neglected.

At a final stage of the flashing-termination processing the flag is set to 1. When all values of the countdown timers being greater than 2T are determined, the image-blur suppression processing is interrupted again and image-blur suppression is performed continuously.

When all values of the countdown timers being smaller than 2T are determined as illustrated in Fig. 17 right before the shutter-shutting processing, the flag becomes 0. In a next interrupt, since the flag is determined not to be 1 at step S10 of Fig. 17, the flow in Fig. 17 will be carried out without actually performing anything.

When the countdown timer 3 counts down to 0, the shutter-shutting processing is interrupted. Even though the timing of the shutter-shutting processing happens to coincide with that of the image-blur suppression processing, since the image-blur suppression processing almost performs nothing at this time, the timing deviation of shutter-shutting processing may be neglected.

At a final stage of the shutter-shutting processing the flag is set to 1. When all values of the countdown timers being greater than 2T are determined, the image-blur suppression processing is interrupted again and image-blur suppression is performed continuously.

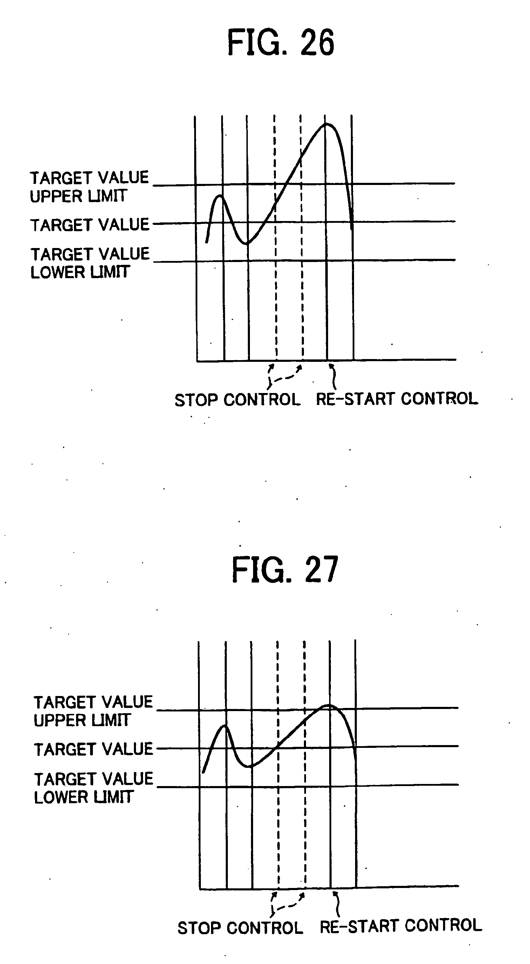

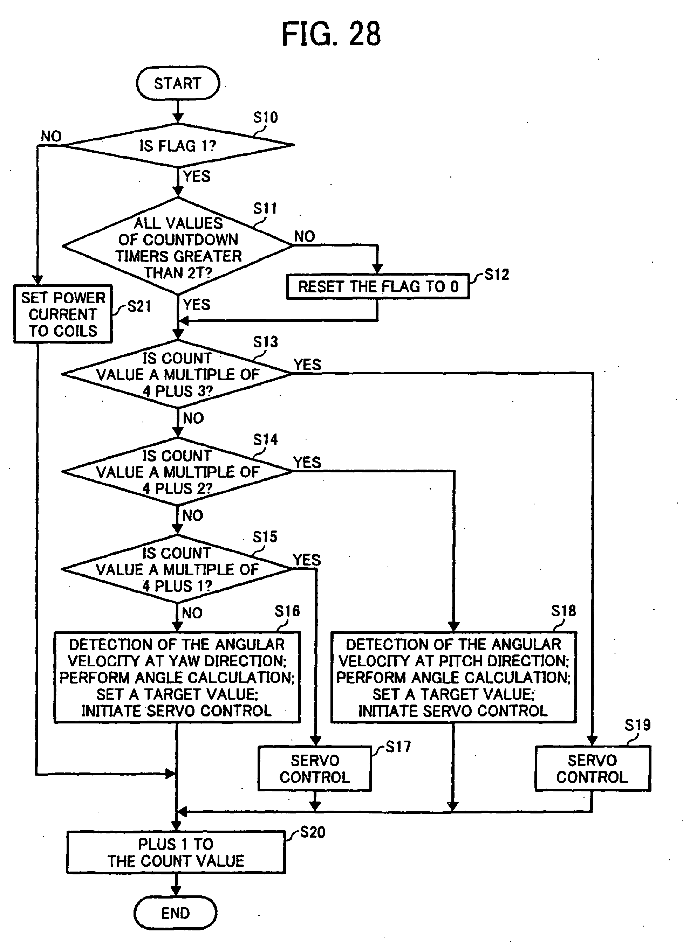

Since the servo control is not performed in the image-blur suppression processing B, power current through a coil illustrated in Fig. 28 remains the same as the predetermined one and the CCD is moved continuously at a predetermined direction until the processing returns back to the image-blur suppression processing A. The exposing is performed, deviated from the target position (Fig. 27). The servo control in Fig. 17 is performed according to the flag value. When the flag is 1, the servo control is performed at a period T= 0.00025s; and when the flag is at 0, the servo control is performed at a period T= 0.00075s. Accordingly, the quality of the image will not be affected.

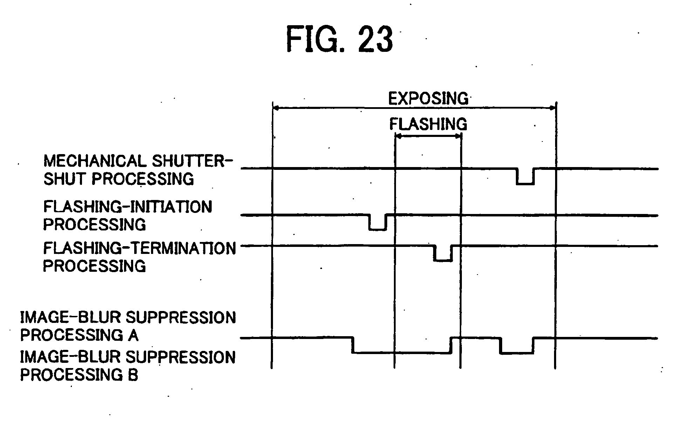

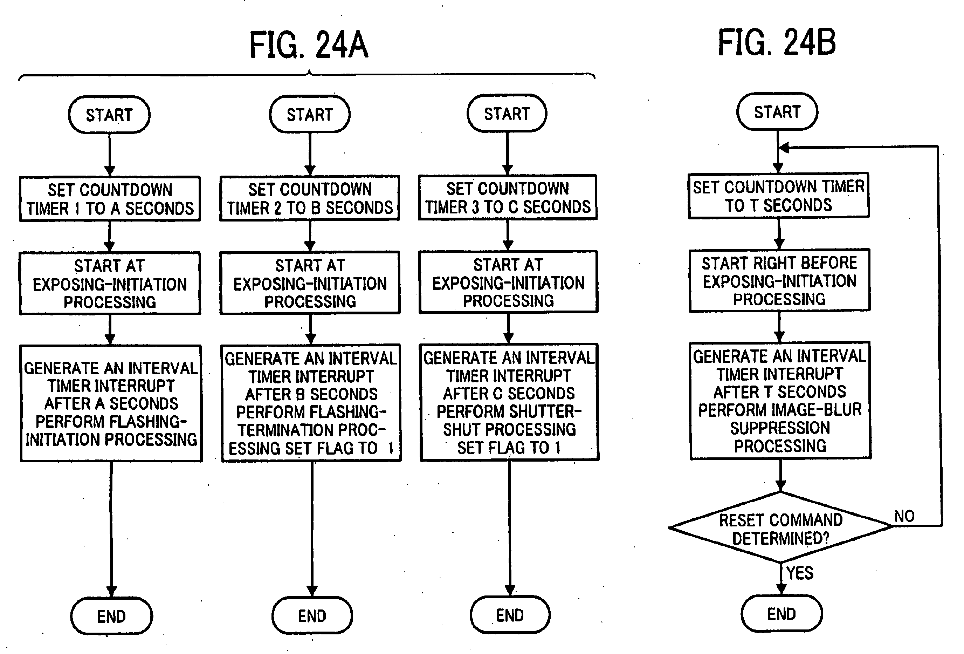

When the time duration from the flash-initiation processing to the flash-termination processing is shorter than 2T, the timing of the flash-termination processing may coincide with the timing of the image-blur suppression processing (0.0001s). In this case, the exposing is performed according to a timing chart illustrated in Fig. 23 instead of that in Fig. 20. Similarly, the countdown timers are performed according to a timing chart illustrated in Fig. 24 instead of that in Fig. 22.

The flag will not go back to 1 after the flash-initiation processing is finished; while it will go back to 1 after the flash-termination processing is carried out. Therefore, the time duration for flashing always remains at 0.000005s since the flag is determined not to be 1 as illustrated in Fig. 17.

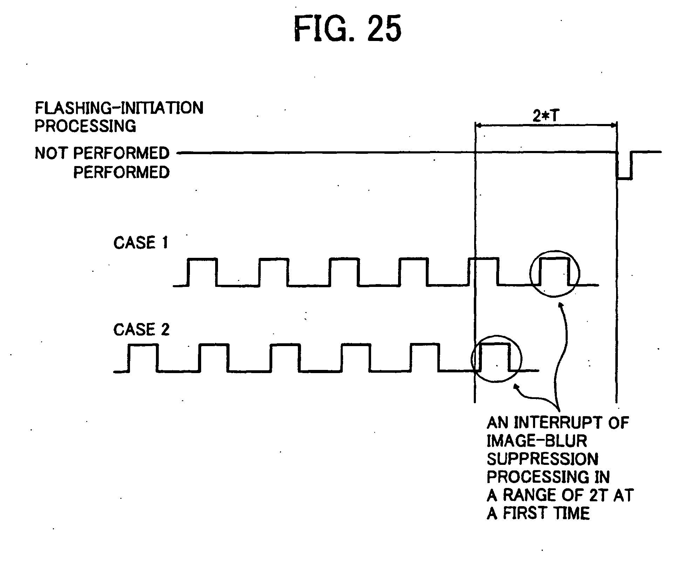

Fig. 25 illustrates proof of taking 2T as a reference in the determination of values of all countdown timers being greater than 2T. Case 1 illustrates a latest time for values of all countdown timers being smaller than 2T; while case 2 illustrates the fastest time for values of all countdown timers being smaller than 2T. In either case when the flash-initiation processing is performed, the flow in Fig. 17 is at 0.000005s. The multiplier 2 of T is the least multiplier such that the time for the flow in Fig. 17 is 0.000005s when the flash-initiation processing is performed.

Herein, all the countdown timers refer to the above-mentioned three countdown timers, or refer to at least one working countdown timer of the three countdown timers.

Embodiment 2

In the present embodiment as illustrated in a flow chart of Fig. 28, when the flag is not 1 at step S10, the process moves to step S21. In other words, when the servo control is pausing, the process moves through block "setting power current of coils" and thereafter to step S20. Power current of coils will be set only at a first time when the process moves through the block. The value for power current of coils uses an average of values of power current which performs the centering of the CCD when the digital camera is in a still state. The values of power current are pre-inputted to the digital camera in manufacture.

The process from step S10 to step S20 illustrated in Fig. 28 is identical to that in Fig. 17.

Although the present invention has been explained in relation to its preferred embodiments and drawings but is not limited thereto, it is to be understood that other possible modifications and variations made without departing from the scope of the invention will be included in the present invention. Therefore, the appended claims encompass all such changes and modifications as falling within the scope of this invention.

**Claims**

1. A photographic apparatus, comprising:

   a photographic optical system (7) having photographic optical axis along a Z axis;
   an image-blur suppression mechanism configured to move an imaging element of the photographic optical system (7) in an XY plane orthogonal to the photographic optical axis and perform first and second image-blur suppression operations at predetermined intervals during an exposure; and
   a controlling device configured to control the image-blur suppression mechanism;
   **characterised in that**:

   the apparatus further comprises countdown timers configured to start when an exposure is initiated;
   the controlling device is configured to temporarily stop and re-start the first image-blur suppression operation during processing to control an exposure and to perform the second image-blur suppression operation while the first image-blur suppression operation is stopped;
   wherein the second image-blur suppression operation is different from the first image-blur suppression operation; and
   the controlling device is configured to control use of the second image-blur suppression operation based on values of the countdown timers such that the second image-blur suppression operation is performed during shutter-shutting processing, flashing-initiation processing and flashing-termination processing of the exposure.

2. The photographic apparatus as claimed in claim 1, wherein, in the second image-blur suppression operation, a driving force provided to the photographic optical system by the image-blur suppression mechanism is reset to a predetermined value.

3. An image-blur suppression method, comprising the steps of:

moving an imaging element disposed along a photographic optical axis of a photographic optical system (7) in a plane orthogonal to the photographic optical axis and performing first and second image-blur suppression operations at predetermined intervals during an exposure;
**characterised by** the steps of:

starting countdown timers when an exposure is initiated;
temporarily stopping and re-starting the first image-blur suppression operation during processing to control an exposure; and
performing a second image-blur suppression operation while the first image-blur suppression operation is stopped;
wherein the second image-blur suppression operation is different from the first image-blur suppression operation; and
the second image-blur suppression operation is used based on values of the countdown timers such that the second image-blur suppression operation is performed during shutter-shutting processing, flashing initiation processing and flashing-termination processing of the exposure.

4. The image-blur suppression method as claimed in claim 3, wherein, in the second image-blur suppression operation, a driving force provided to the photographic optical system is reset to a predetermined value.

**Patentansprüche**

1. Fotografische Vorrichtung, umfassend:

ein fotografisches optisches System (7), das fotografische optische Achse entlang einer Z-Achse hat;
einen Bildunschärfeunterdrückungsmechanismus, der konfiguriert ist, ein Bildelement des fotografischen optischen Systems (7) in eine XY-Ebene senkrecht zu der fotografischen optischen Achse zu bewegen und erste und zweite Bildunschärfeunterdrückungsvorgänge in vorbestimmten Intervallen während einer Belichtung durchzuführen; und
eine Steuereinrichtung, die konfiguriert ist, den Bildunschärfeunterdrückungsmechanismus zu steuern;
**dadurch gekennzeichnet, dass**:

die Vorrichtung ferner Countdowntimer beinhaltet, die konfiguriert sind zu starten, wenn eine Belichtung eingeleitet wird;
die Steuereinrichtung konfiguriert ist, den ersten Bildunschärfeunterdrückungsvorgang während einer Verarbeitung vorübergehend anzuhalten und wieder zu starten, um eine Belichtung zu steuern, und den zweiten Bildunschärfeunterdrückungsvorgang durchzuführen, während der erste Bildunschärfeunterdrückungsvorgang angehalten ist;
wobei der zweite Bildunschärfeunterdrückungsvorgang von dem ersten Bildunschärfeunterdrückungsvorgang unterschiedlich ist; und
die Steuereinrichtung konfiguriert ist, eine Verwendung des zweiten Bildunschärfeunterdrückungsvorgangs basierend auf Werten der Countdowntimer so zu steuern, dass der zweite Bildunschärfeunterdrückungsvorgang während einer Blendenschließverarbeitung, Blitzeinleitungsverarbeitung und Blitzbeendigungsverarbeitung der Belichtung durchgeführt wird.

2. Fotografische Vorrichtung wie in Anspruch 1 beansprucht, bei der in dem zweiten Bildunschärfeunterdrückungsvorgang eine Antriebskraft, die dem fotografischen optischen System von dem Bildunschärfeunterdrückungsmechanismus bereitgestellt wird, auf einen vorbestimmten Wert zurückgesetzt wird.

3. Bildunschärfeunterdrückungsverfahren, enthaltend folgende Schritte:

Bewegen eines Bildelements, das entlang einer fotografischen optischen Achse eines fotografischen optischen Systems (7) in einer zu der fotografischen optischen Achse senkrechten Ebene angeordnet ist, und Durchführen eines ersten und zweiten Bildunschärfeunterdrückungsvorgangs in vorbestimmten Intervallen während einer Belichtung;

**gekennzeichnet durch** folgende Schritte;

Starten von Countdowntimern, wenn eine Belichtung eingeleitet wird;

Vorübergehendes Anhalten und Wiederstarten des ersten Bildunschärfeunterdrückungsvorgangs während einer Verarbeitung zum Steuern einer Belichtung; und

Durchführen eines zweiten Bildunschärfeunterdrückugnsvorgangs, während der erste Bildunschärfeunterdrückungsvorgangs angehalten ist;

wobei der zweite Bildunschärfeunterdrückungsvorgang von dem ersten Bildunschärfeunterdrückungsvorgang unterschiedlich ist; und

der zweiten Bildunschärfeunterdrückungsvorgangs basierend auf Werten der Countdowntimer so verwendet wird, dass der zweite Bildunschärfeunterdrückungsvorgang während einer Blendenschließverarbeitung, Blitzeinleitungsverarbeitung und Blitzbeendigungsverarbeitung der Belichtung durchgeführt wird.

4.  Bildunschärfeunterdrückungsverfahren wie in Anspruch 3 beansprucht, bei dem in dem zweiten Bildunschärfeunterdrückungsvorgang eine Antriebskraft, die dem fotografischen optischen System von dem Bildunschärfeunterdrückungsmechanismus bereitgestellt wird, auf einen vorbestimmten Wert zurückgesetzt wird.

## Revendications

1.  Appareil photographique, comprenant :

    un système optique photographique (7) ayant un axe optique photographique le long d'un axe Z ;
    un mécanisme de suppression de flou d'image configuré pour déplacer un élément de formation d'image du système optique photographique (7) dans un plan XY orthogonal à l'axe optique photographique et pour effectuer des première et deuxième opérations de suppression de flou d'image à des intervalles prédéterminés pendant une exposition ; et
    un dispositif de commande configuré pour commander le mécanisme de suppression de flou d'image ;
    **caractérisé en ce que** :

    l'appareil comprend en outre des registres d'horloge de décomptage configurés pour démarrer lorsqu'une exposition est lancée ;
    le dispositif de commande est configuré pour arrêter temporairement et redémarrer la première opération de suppression de flou d'image pendant le traitement pour commander une exposition et pour effectuer la deuxième opération de suppression de flou d'image alors que la première opération de suppression de flou d'image est arrêtée ;
    dans lequel la deuxième opération de suppression de flou d'image est différente de la première opération de suppression de flou d'image ; et
    le dispositif de commande est configuré pour commander l'utilisation de la deuxième opération de suppression de flou d'image sur la base des valeurs des registres d'horloge de décomptage de sorte que la deuxième opération de suppression de flou d'image soit effectuée pendant le traitement de fermeture d'obturateur, le traitement de lancement de flash et le traitement d'arrêt de flash de l'exposition.

2.  Appareil photographique selon la revendication 1, dans lequel, dans la deuxième opération de suppression de flou d'image, une force d'entraînement appliquée au système optique photographique par le mécanisme de suppression de flou d'image est réinitialisée à une valeur prédéterminée.

3.  Procédé de suppression de flou d'image, comprenant les étapes consistant à :

    déplacer un élément de formation d'image disposé le long d'un axe optique photographique d'un système optique photographique (7) dans un plan orthogonal à l'axe optique photographique et effectuer des première et deuxième opérations de suppression de flou d'image à des intervalles prédéterminés pendant une exposition ;
    **caractérisé par** les étapes consistant à :

    démarrer des registres d'horloge de décomptage lorsqu'une exposition est lancée ;

arrêter temporairement et redémarrer la première opération de suppression de flou d'image pendant le traitement pour commander une exposition ; et

effectuer une deuxième opération de suppression de flou d'image alors que la première opération de suppression de flou d'image est arrêtée ;

dans lequel la deuxième opération de suppression de flou d'image est différente de la première opération de suppression de flou d'image ; et

la deuxième opération de suppression de flou d'image est utilisée sur la base des valeurs des registres d'horloge de décomptage de sorte que la deuxième opération de suppression de flou d'image soit effectuée pendant le traitement de fermeture d'obturateur, le traitement de lancement de flash et le traitement d'arrêt de flash de l'exposition.

4. Procédé de suppression de flou d'image selon la revendication 3, dans lequel, dans la deuxième opération de suppression de flou d'image, une force d'entraînement appliquée au système optique photographique est réinitialisée à une valeur prédéterminée.

# FIG. 1A

# FIG. 1B

# FIG. 1C

# FIG. 2

LENS BARREL UNIT 7

DIGITAL STILL
CAMERA PROCESSOR 104

| ZOOM OPTICAL SYSTEM 71 | FOCUS OPTICAL SYSTEM 72 | APERTURE STOP UNIT 73 | MECHANICAL SHUTTER UNIT 74 |
|---|---|---|---|

ZOOM LENS 71a    FOCUS LENS 72a    APERTURE STOP 73a    MECHANICAL SHUTTER 74a

ZOOM MOTOR 71b   FOCUS MOTOR 72b   APERTURE STOP MOTOR 73b   MECHANICAL SHUTTER MOTOR 74b

MOTOR DRIVER 75

RETENTION 1263 ← STM1 ← DRIVER

POSITION DETECTION ELEMENT 1252 → AMP 1261 1253

GYRO 1240 → SENSOR 1241 → LPF-AMP 1242

CCD STAGE 101

F/E-IC 102
CCD 1251 → CDS 1021 → AGC 1022 → A/D 1023
TG 1024 → VD, HD SIGNAL

A/D CONVERTOR 10411

CCD1 SIGNAL PROCESS BLOCK 1041

CCD2 SIGNAL PROCESS BLOCK 1042

SDRAM 103
RAW-RGB IMAGE DATA   YUV IMAGE DATA   JPEG IMAGE DATA

USB BLOCK 1045
SERIAL BLOCK 1046
JPEG CODEC BLOCK 1047
RESIZE BLOCK 1048
TV SIGNAL DISPLAY BLOCK 1049

USB CONNECTOR 122
SERIAL DRIVER CIRCUIT 1231
RS-232C CONNECTOR 1232

LCD DRIVER 117   LCD MONITOR 10
VIDEO AMP 118   VIDEO JACK 119

ACTUATOR 1255 ← DRIVER 1254 ← IC1
MD1, MD2

CPU BLOCK 1043

LOCAL SRAM 1044

MEMORY CARD CONTROLLER BLOCK 10410

MEMORY CARD THROTTLE 121   MEMORY CARD

STROBOSCOPIC LIGHT EMITTING DEVICE 3   STROBOSCOPIC CIRCUIT 114

RANGING UNIT 5

MICROPHONE 1153 → MICROPHONE AMP 1152 → SOUND RECORDING CIRCUIT 1151

SPEAKER 1163 → AUDIO AMP 1162 → SOUND REPRODUCING CIRCUIT 1161

SUB LCD 1 → LCD DRIVER 111 → SUB-CPU 109

AF LED 8
STROBOSCOPIC LED 9
REMOTECONTROL LIGHT RECEIVING PORTION 6

SW1-SW14 OPERATION KEY UNIT   BUZZER 113

RAM 107

INTERNAL MEMORY 120

ROM 108
CONTROL PROGRAM

EP 1 892 951 B1

# FIG. 3

# FIG. 4A

START

SET COUNTDOWN TIMER
AT X SECONDS

START

GENERATE/PERFORM AN
INTERVAL TIMER INTERRUPT

END

# FIG. 4B

START

SET FREE-RUN TIMER
AT X SECONDS

START

GENERATE/PERFORM AN
INTERVAL TIMER INTERRUPT

RESET COMMAND
INPUTTED? — NO

YES

END

# FIG. 5A

# FIG. 5B

# FIG. 6

# FIG. 7

# FIG. 8A

# FIG. 8B

# FIG. 9

# FIG. 10

# FIG. 11A

# FIG. 11B

## FIG. 12A

## FIG. 12B

## FIG. 12C

## FIG. 12D

## FIG. 12E

## FIG. 13A

## FIG. 13B

## FIG. 14

FOCAL LENGTH ($\mu$m)

# FIG. 15

# FIG. 16A

0.0001s     0.0001s     0.0001s     0.0001s

0.00025s   0.00025s   0.00025s   0.00025s   0.00025s

# FIG. 16B

0.000005s   0.000005s   0.000005s   0.000005s

0.00025s   0.00025s   0.00025s   0.00025s   0.00025s

# FIG. 17

START

S10 — IS FLAG 1? — NO / YES

S11 — ALL VALUES OF COUNTDOWN TIMERS GREATER THAN 2T? — NO / YES

S12 — RESET THE FLAG TO 0

S13 — IS COUNT VALUE A MULTIPLE OF 4 PLUS 3? — YES / NO

S14 — IS COUNT VALUE A MULTIPLE OF 4 PLUS 2? — YES / NO

S15 — IS COUNT VALUE A MULTIPLE OF 4 PLUS 1? — YES / NO

S16 — DETECTION OF THE ANGULAR VELOCITY AT YAW DIRECTION; PERFORM ANGLE CALCULATION; SET A TARGET VALUE; INITIATE SERVO CONTROL

S18 — DETECTION OF THE ANGULAR VELOCITY AT PITCH DIRECTION; PERFORM ANGLE CALCULATION; SET A TARGET VALUE; INITIATE SERVO CONTROL

S17 — SERVO CONTROL

S19 — SERVO CONTROL

S20 — PLUS 1 TO THE COUNT VALUE

END

# FIG. 18

TARGET VALUE
UPPER LIMIT

TARGET VALUE

TARGET VALUE
LOWER LIMIT

CONTROL AT EVERY T SECONDS

# FIG. 19

START

IMAGE-BLUR SUPPRESSION SWITCH SW14 IS SET ON. — S30

GYRO SENSORS ARE POWERED ON — S31

RELEASE SWITCH SW1 IS HALF PRESSED. — S32

A CONTROL PERIOD IS DETERMINED. — S33

A CENTERING CONTROL OF CCD IS INITIATED — S34

CCD STAGE IS FIXED — S36

RELEASE SWITCH SW1 IS FULLY PRESSED. — S35

NO

YES

IS RELEASE SWITCH SW2 PRESSED? — S37

NO

YES

DETERMINE CONTROL PERIOD — S38

CHANGE CONTROL PERIOD — S39

INITIATE FOLLOWING OF CCD — S40

PERFORM EXPOSING — S41

TERMINATE EXPOSING — S42

INITIATE CENTERING CONTROL OF CCD RIGHT AFTER THE FOLLOWING OF THE CCD IS FINISHED — S43

CENTERING CONTROL OF CCD FINISHED? — S44

NO

YES

FIX CCD STAGE — S45

END

# FIG. 20

RELEASE
SWITCH SW2

NOT PERFORMED
PERFORMED

MECHANICAL SHUTTER

OPEN
SHUT

EXPOSING

FLASHING

MECHANICAL SHUTTER-
SHUT PROCESSING

FLASHING-INITIATION
PROCESSING

FLASHING-TERMINATION
PROCESSING

IMAGE-BLUR SUPPRESSION
PROCESSING A

IMAGE-BLUR SUPPRESSION
PROCESSING B

# FIG. 21

EXPOSING

FLASHING

COUNTDOWN TIMER 3

MECHANICAL SHUTTER-
SHUT PROCESSING

FLASHING-INITIATION
PROCESSING

COUNTDOWN TIMER 1

FLASHING-TERMINATION
PROCESSING

COUNTDOWN
TIMER 2

IMAGE-BLUR SUPPRESSION
PROCESSING A

IMAGE-BLUR SUPPRESSION
PROCESSING B

## FIG. 22A

Flowchart 1:
START → SET COUNTDOWN TIMER 1 TO A SECONDS → START AT EXPOSING-INITIATION PROCESSING → GENERATE AN INTERVAL TIMER INTERRUPT AFTER A SECONDS PERFORM FLASHING-INITIATION PROCESSING SET FLAG TO 1 → END

Flowchart 2:
START → SET COUNTDOWN TIMER 2 TO B SECONDS → START AT EXPOSING-INITIATION PROCESSING → GENERATE AN INTERVAL TIMER INTERRUPT AFTER B SECONDS PERFORM FLASHING-TERMINATION PROCESSING SET FLAG TO 1 → END

Flowchart 3:
START → SET COUNTDOWN TIMER 3 TO C SECONDS → START AT EXPOSING-INITIATION PROCESSING → GENERATE AN INTERVAL TIMER INTERRUPT AFTER C SECONDS PERFORM SHUTTER-SHUT PROCESSING SET FLAG TO 1 → END

## FIG. 22B

START → SET COUNTDOWN TIMER TO T SECONDS → START RIGHT BEFORE EXPOSING-INITIATION PROCESSING → GENERATE AN INTERVAL TIMER INTERRUPT AFTER T SECONDS PERFORM IMAGE-BLUR SUPPRESSION PROCESSING → RESET COMMAND DETERMINED? — NO (loops back to SET COUNTDOWN TIMER TO T SECONDS) / YES → END

# FIG. 23

# FIG. 24A

```
        START                    START                    START

SET COUNTDOWN          SET COUNTDOWN          SET COUNTDOWN
TIMER 1 TO A SECONDS   TIMER 2 TO B SECONDS   TIMER 3 TO C SECONDS

   START AT               START AT               START AT
EXPOSING-INITIATION   EXPOSING-INITIATION   EXPOSING-INITIATION
   PROCESSING            PROCESSING            PROCESSING

GENERATE AN INTERVAL  GENERATE AN INTERVAL  GENERATE AN INTERVAL
TIMER INTERRUPT       TIMER INTERRUPT       TIMER INTERRUPT
AFTER A SECONDS       AFTER B SECONDS       AFTER C SECONDS
PERFORM FLASHING-     PERFORM FLASHING-     PERFORM SHUTTER-
INITIATION PROCESSING TERMINATION PROC-     SHUT PROCESSING
                      ESSING SET FLAG TO 1  SET FLAG TO 1

        END                      END                      END
```

# FIG. 24B

```
        START

SET COUNTDOWN TIMER
TO T SECONDS

START RIGHT BEFORE
EXPOSING-INITIATION
PROCESSING

GENERATE AN INTERVAL
TIMER INTERRUPT
AFTER T SECONDS
PERFORM IMAGE-BLUR
SUPPRESSION
PROCESSING

RESET COMMAND          NO
DETERMINED?

        YES

        END
```

EP 1 892 951 B1

# FIG. 25

FLASHING-INITIATION
PROCESSING

2*T

NOT PERFORMED
PERFORMED

CASE 1

CASE 2

AN INTERRUPT OF
IMAGE-BLUR
SUPPRESSION
PROCESSING IN
A RANGE OF 2T AT
A FIRST TIME

# FIG. 26

TARGET VALUE
UPPER LIMIT

TARGET VALUE

TARGET VALUE
LOWER LIMIT

STOP CONTROL    RE-START CONTROL

# FIG. 27

TARGET VALUE
UPPER LIMIT

TARGET VALUE

TARGET VALUE
LOWER LIMIT

STOP CONTROL    RE-START CONTROL

41

# FIG. 28

```
                    ┌─────────┐
                    │  START  │
                    └─────────┘
                         │
                         ▼                    S10
        NO        ◇─────────────────◇
    ◄─────────────     IS FLAG 1?
                  ◇─────────────────◇
    │                    │
    │                    │ YES
    │                    ▼                         S11
    │         ◇──────────────────────◇
    │              ALL VALUES
    │              OF COUNTDOWN              NO
    │              TIMERS GREATER    ─────────────────┐
    │              THAN 2T?                           │
    │         ◇──────────────────────◇                ▼
    ▼                    │ YES              ┌──────────────────────┐
┌──────────┐            │                  │  RESET THE FLAG TO 0  │ S12
│SET POWER │  S21       │                  └──────────────────────┘
│CURRENT   │            │                           │
│TO COILS  │            ▼                            │
└──────────┘  ◇──────────────────◇  ◄───────────────┘
    │              IS COUNT        S13
    │          VALUE A MULTIPLE OF      YES
    │              4 PLUS 3?         ──────────────────────────────────────┐
    │         ◇──────────────────◇                                         │
    │                  │ NO                                                │
    │                  ▼                S14                                 │
    │         ◇──────────────────◇                                         │
    │              IS COUNT                                                │
    │          VALUE A MULTIPLE OF      YES                                │
    │              4 PLUS 2?         ─────────────────────┐                │
    │         ◇──────────────────◇                        │                │
    │                  │ NO                               │                │
    │                  ▼                S15               │                │
    │         ◇──────────────────◇                        │                │
    │              IS COUNT                               │                │
    │          VALUE A MULTIPLE OF      YES               │                │
    │              4 PLUS 1?         ─────────┐           │                │
    │         ◇──────────────────◇            │           │                │
    │                  │ NO          S16      │           │                │
    │                  ▼                      │           │                │
    │   ┌──────────────────────────────┐     │  ┌──────────────────────────────┐
    │   │  DETECTION OF THE ANGULAR     │     │  │  DETECTION OF THE ANGULAR     │  S18
    │   │  VELOCITY AT YAW DIRECTION;   │     │  │  VELOCITY AT PITCH DIRECTION; │
    │   │  PERFORM ANGLE CALCULATION;   │     │  │  PERFORM ANGLE CALCULATION;   │
    │   │  SET A TARGET VALUE;          │     │  │  SET A TARGET VALUE;          │
    │   │  INITIATE SERVO CONTROL       │     │  │  INITIATE SERVO CONTROL       │
    │   └──────────────────────────────┘     │  └──────────────────────────────┘
    │                  │                      │           │                │
    │                  │          ┌───────────┘           │                ▼
    │                  │          ▼              S17       │         ┌──────────┐
    │                  │   ┌──────────────┐                │         │  SERVO   │  S19
    │                  │   │    SERVO     │                │         │ CONTROL  │
    └──────────────────┤   │   CONTROL    │                │         └──────────┘
                       │   └──────────────┘                │                │
                       │          │                        │                │
                       ▼          ▼                        ▼                │
                    ◄──────────────────────────────────────────────────────┘
                       │                         S20
                       ▼
              ┌──────────────────────┐
              │      PLUS 1 TO        │
              │   THE COUNT VALUE     │
              └──────────────────────┘
                       │
                       ▼
                    ┌─────────┐
                    │   END   │
                    └─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001066655 A
- JP H11183954 A
- JP 2005286902 A
- US 6704501 B
- US 5576787 A